# EUROPÄISCHE PATENTSCHRIFT

(11) **EP 3 111 705 B1**
(45) Veröffentlichungstag und Bekanntmachung des Hinweises auf die Patenterteilung: **13.06.2018**
(21) Anmeldenummer: 15707591.2
(22) Anmeldetag: 25.02.2015
(51) Int. Cl.: H04L 5/00, H04L 29/06, H04W 52/02

(54) **DATENSENDEANORDNUNG UND VERFAHREN ZUM BETREIBEN DERSELBEN**
DATA TRANSMITTING ASSEMBLY AND METHOD FOR OPERATING THE SAME
DISPOSITIF D'ÉMISSION DE DONNÉES ET PROCÉDÉ DE FONCTIONNEMENT ASSOCIÉ

(30) Priorität: 26.02.2014 EP 14156802
(43) Veröffentlichungstag der Anmeldung: 04.01.2017
(60) Teilanmeldung: 17168814.6
(73) Patentinhaber: Fraunhofer-Gesellschaft zur Förderung der angewandten Forschung e.V., 80686 München (DE)
(72) Erfinder: BERNHARD, Josef, 92507 Nabburg (DE); KILIAN, Gerd, 91056 Erlangen (DE)
(74) Vertreter: Hersina, Günter
(86) Internationale Anmeldenummer: PCT/EP2015/053947
(87) Internationale Veröffentlichungsnummer: WO 2015/128385

(56) Entgegenhaltungen:
- EP-A2- 0 903 883
- EP-A2- 1 420 529
- EP-A2- 1 677 448
- WO-A1-2009/081425
- WO-A1-2009/157758
- WO-A2-2004/051872
- US-A1- 2006 103 534
- US-A1- 2006 119 344
- US-A1- 2010 251 038
- US-A1- 2010 264 906
- US-A1- 2011 222 419

## Beschreibung

Ausführungsbeispiele der vorliegenden Erfindung beziehen sich auf eine Datensendeanordnung, ein System mit einer Datensendeanordnung sowie Verfahren zum Betrieb derselben. Weitere Ausführungsbeispiele beziehen sich auf eine mit Energie selbstversorgende Datensendeanordnung. Manche Ausführungsbeispiele beziehen sich auf ein drahtloses Übertragungsverfahren für Kleinsender mit limitierter Energieversorgung.
Für die Übertragung von kleinen Datenmengen von einer großen Anzahl von Knoten, z.B. von Sensordaten wie etwa von Heizungs-, Strom- oder Wasserzählern, zu einer Basisstation kann ein Funkübertragungssystem zum Einsatz kommen. Die Basisstation empfängt (und möglicherweise steuert) dabei eine große Anzahl von Knoten. An der Basisstation steht in der Regel mehr Rechenleistung und auch eine komplexere Hardware, d.h. im Allgemeinen auch ein Empfänger mit höherer Leistungsfähigkeit, zur Verfügung. In den Knoten werden günstige Quarze, die meistens einen Frequenzoffset von 10 ppm oder mehr aufweisen, verwendet.
Es gibt bereits verschiedene unidirektionale und bidirektionale Systeme für die Übertragung von Daten zwischen Basisstationen und Knoten. Bekannt sind Systeme wie z.B. DECT (DECT = digital enhanced cordless telecommunications, ein internationaler Standard für Telekommunikation mittels Funktechnik) und RFID (RFID = radio frequency identification, dt. Identifizierung mit Hilfe elektromagnetischer Wellen). Typisch an diesen Systemen ist, dass die Basisstation eine Referenzfrequenz und eine Referenzzeit vorgibt, auf die sich die Teilnehmer synchronisieren. Bei RFID-Systemen gibt das RFID-Lesegerät ein Zeitfenster vor, das unmittelbar nach seiner Aussendung folgt, innerhalb dessen sich die RFID-Transponder zufällig einen Zeitpunkt für die Rückantwort aussuchen. Das vorgegebene Zeitintervall ist zudem in Zeitschlitze gleicher Länge unterteilt. Man spricht hier von einem zeitschlitzbasiertem (engl. slotted) Aloha Protokoll. Bei DECT wiederum sind Zeitschlitze innerhalb eines fest vorgegebenen Rasters vorgesehen. Die Basisstation ordnet hier einem Teilnehmer einen exakten Zeitschlitz zu, den er für die Kommunikation verwenden darf. Aufgrund der Ungenauigkeit durch die Quarztoleranz ist zwischen den Zeitschlitzen eine Pufferzeit vorgesehen, damit sich die Telegramme nicht überlagern.
In der DE 10 2011 082 098 A1 wird ein Verfahren zum Betrieb batteriebetriebener Datensender beschrieben, bei dem ein Sensordatenpaket (Telegramm) in zumindest zwei Datenpakete unterteilt wird, die kleiner sind als die eigentliche Information, die übertragen werden soll (engl. telegram splitting). Telegramme werden dabei auf mehrere Datenpakete (Teilpakete) aufgeteilt. Ein solches Datenpaket (Teilpaket) wird als Hop bezeichnet. In einem Hop werden mehrerer Informationssymbole übertragen. Die Hops werden auf einer Frequenz oder aber über mehrere Frequenzen verteilt (engl. frequency hopping) gesendet. Zwischen den Hops gibt es Pausen, in denen nicht gesendet wird.

Weitere Datensender sind in US 2011/222419 A1 beschrieben.

Datensender können nicht nur batteriebetrieben sein, sondern ihre Energie über ein Energy-Harvesting-Element aus der Umgebung beziehen, wie beispielsweise über eine Solarzelle, aus einer Bewegung oder über Temperaturdifferenzen. Bekannt ist beispielsweise das EnOcean® System für drahtlose Funkschalter.
Bei Datensendern, die Ihre Energie über ein Energy-Harvesting-Verfahren aus der Umwelt, z.B. über Licht, Temperaturunterschiede oder Vibrationen, ziehen, ist unter Umständen keine konstante Energieversorgung möglich. Gleiches kann auch für Datensender gelten, die Batteriebetrieben sind, bei denen aber nur eine begrenzte Energiemenge pro Zeit entnommen werden kann.
Der vorliegenden Erfindung liegt somit die Aufgabe zugrunde, ein Konzept zu schaffen, welches auch bei einer begrenzten bzw. variablen Energieversorgung eine sichere und effiziente Übertragung von Nutzdaten ermöglicht.

Diese Aufgabe wird gelöst durch eine Datensendeanordnung gemäß Anspruch 1 ein System gemäß Anspruch 5, ein Verfahren gemäß Anspruch 11, einem Computerprogramm gemäß Anspruch 12. Ausführungsbeispiele der vorliegenden Erfindung schaffen eine Datensendeanordnung mit einer Energieversorgungseinrichtung zur Versorgung der Datensendeanordnung mit elektrischer Energie; einer Einrichtung zum Ermitteln von Nutzdaten, die von einem mit der Datensendeanordnung verbundenen Sensorelement bereitgestellt werden; einer Einrichtung zum Kanalcodieren der Nutzdaten, um kanalcodierte Daten zu erhalten; einer Einrichtung zum Aufteilen der kanalcodierten Daten in eine Mehrzahl von Datenpaketen mit einer Coderate kleiner eins; und einer Einrichtung zum Senden von Datenpaketen, die ausgebildet ist, um die Mehrzahl von Datenpaketen mit einem zeitlichen Abstand über einen Kommunikationskanal zu senden, sofern eine von der Energieversorgungseinrichtung bereitstellbare elektrische Energiemenge zum Senden der jeweiligen Datenpakete mit einer Standardsendeleistung ausreichend ist. Die Einrichtung zum Senden von Datenpaketen ist dabei ausgebildet, um entweder ein zum Senden anstehendes Datenpaket der Mehrzahl von Datenpaketen mit einer reduzierten Sendeleistung zu senden, falls eine von der Energieversorgungseinrichtung bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist, oder um ein zum Senden anstehendes Datenpaket der Mehrzahl von Datenpaketen nicht zu senden oder verzögert zu senden, falls eine von der Energieversorgungseinrichtung bereitstellbare elektrische Energiemenge zum Senden des jeweiligen Datenpakets nicht ausreichend ist.

Weitere Ausführungsbeispiele der vorliegenden Erfindung schaffen eine sich mit Energie selbstversorgende Datensendeanordnung. Die Datensendeanordnung umfasst eine Energieversorgungseinrichtung zur Versorgung der Datensendeanordnung mit elektrischer Energie, wobei die Energieversorgungseinrichtung ein Energy-Harvesting-Element zur leitungsungebunden Energiegewinnung aus der Umgebung der Datensendeanordnung aufweist; eine Einrichtung zum Ermitteln von Nutzdaten, die von einem mit der Datensendeanordnung verbundenen Sensorelement bereitgestellt werden; eine Einrichtung zum kanalcodieren der Nutzdaten, um kanalcodierte Daten zu erhalten; eine Einrichtung zum Aufteilen der kanalcodierten Daten in eine Mehrzahl von Datenpaketen mit einer Coderate kleiner eins; und eine Einrichtung zum Senden von Datenpaketen, die ausgebildet ist, um die Mehrzahl von Datenpaketen mit einem zeitlichen Abstand über einen Kommunikationskanal zu senden, sofern eine von der Energieversorgungseinrichtung bereitstellbare elektrische Energiemenge zum Senden der jeweiligen Datenpakete mit einer Standardsendeleistung ausreichend ist. Dabei ist die Einrichtung zum Senden von Datenpaketen ausgebildet, um ein zum Senden anstehendes Datenpaket der Mehrzahl von Datenpaketen mit einer reduzierten Sendeleistung zu senden, falls eine von der Energieversorgungseinrichtung bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist; und/oder ein zum Senden anstehendes Datenpaket der Mehrzahl von Datenpaketen nicht zu senden oder verzögert zu senden, falls eine von der Energieversorgungseinrichtung bereitstellbare elektrische Energiemenge zum Senden des jeweiligen Datenpakets nicht ausreichend ist.

Der vorliegenden Erfindung liegt die Idee zugrunde, die Mehrzahl von Datenpaketen, die jeweils einen Teil der kanalcodierten Daten enthalten, mit einer Standardsendeleistung und einem zeitlichen Abstand über einen Kommunikationskanal zu senden, sofern eine von der Energieversorgungseinrichtung bereitstellbare elektrische Energiemenge hierfür ausreichend ist. Sollte die von der Energieversorgungseinrichtung bereitstellbare elektrische Energiemenge hierfür hingegen nicht ausreichend sein, wird ein zum Senden anstehendes Datenpaket (z.B. das nächste zu sendende Datenpaket gemäß einer Warteschlange) der Mehrzahl von Datenpaketen in Abhängigkeit von der zur Verfügung stehenden elektrischen Energiemenge mit reduzierter Sendeleistung gesendet, nicht gesendet, oder später gesendet.

Bei der Übertragung der Datenpakete über einen Kommunikationskanal von der sich selbst mit Energie versorgenden Datensendeanordnung zu einem Datenempfänger können die Datenpakete gestört werden, beispielsweise durch Rauschen oder durch andere Datensender, die gleichzeitig im gleichen oder ähnlichem Frequenzband Datenpakete senden.

Die Einrichtung zum Empfangen von Datenpaketen des Datenempfängers ist daher konfiguriert, um die durch das Senden der Datenpakete in der Einrichtung zum Empfangen von Datenpaketen jeweils hervorgerufene Empfangsleistungsveränderung des Empfangsdatenstroms zu ermitteln, und um jedes der Datenpakete basierend auf der in der Einrichtung zum Empfangen von Datenpaketen hervorgerufenen Empfangsleistungsveränderung für eine Weiterverarbeitung zu gewichten, um empfangene Datenpakete zu erhalten.

Weitere Ausführungsbeispiele der vorliegenden Erfindung schaffen ein Verfahren zum Betrieb einer Datensendeanordnung. Die Datensendeanordnung weist eine Energieversorgungseinrichtung zur Versorgung der Datensendeanordnung mit elektrischer Energie auf. Das Verfahren umfasst Ermitteln von Nutzdaten, die von einem mit der Datensende-anordnung verbundenen Sensorelement bereitgestellt werden; Kanalcodieren der Nutzdaten, um kanalcodierte Daten zu erhalten; Aufteilen der kanalcodierten Daten in eine Mehrzahl von Datenpaketen mit einer Coderate kleiner eins; Senden der Mehrzahl von Datenpaketen mit einem zeitlichen Abstand über einen Kommunikationskanal, sofern eine von der Energieversorgungseinrichtung bereitstellbare elektrische Energiemenge zum Senden der jeweiligen Datenpakete mit einer Standardsendeleistung ausreichend ist. Dabei umfasst das Senden der Mehrzahl von Datenpaketen Senden eines anstehenden Datenpakets der Mehrzahl von Datenpaketen mit einer reduzierten Sendeleistung, falls eine von der Energieversorgungseinrichtung bereitstellbare elektrische Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist; oder Senden eines anstehendes Datenpakets der Mehrzahl von Datenpaketen nicht oder verzögert, falls eine von der Energieversorgungseinrichtung bereitstellbare elektrische Energiemenge zum Senden des jeweiligen Datenpakets nicht ausreichend ist.

Ausführungsbeispiele der vorliegenden Erfindung werden bezugnehmend auf die beiliegenden Zeichnungen näher erläutert. Es zeigen:
- Fig. 1: ein schematisches Blockschaltbild einer Datensendeanordnung, gemäß einem Ausführungsbeispiel der vorliegenden Erfindung;
- Fig. 2: ein schematisches Blockschaltbild eines Datenempfängers, gemäß einem Ausführungsbeispiel der vorliegenden Erfindung;
- Fig. 3: ein schematisches Blockschaltbild eines Systems mit einer Datensendean-ordnung und einem Datenempfänger, gemäß einem Ausführungsbeispiel der vorliegenden Erfindung;
- Fig. 4: in einem Diagramm eine spektrale Belegung des Übertragungskanals über den die Datenpakete übertragen werden aufgetragen über die Zeit;
- Fig. 5a: eine schematische Ansicht eines Datenpakets in komplexer Vektordarstellung mit einer Synchronisationssequenz, die zwischen den in dem Datenpaket enthaltenen Daten angeordnet ist;
- Fig. 5b: eine schematische Ansicht eines Datenpakets in komplexer Vektordarstellung mit einer zweigeteilten Synchronisationssequenz, wobei ein erster Teil der Synchronisationssequenz vor den in dem Datenpaket enthaltenen Daten angeordnet ist und ein zweiter Teil der Synchronisationssequenz nach den in dem Datenpaket enthaltenen Daten angeordnet ist;
- Fig. 5c: eine schematische Ansicht eines Datenpakets in komplexer Vektordarstellung mit einer Synchronisationssequenz, die zwischen den in dem Datenpaket enthaltenen Daten angeordnet ist, wobei das Datenpaket keinen Frequenzversatz aufweist;
- Fig. 5d: eine schematische Ansicht eines Datenpakets in komplexer Vektordarstellung mit einer zweigeteilten Synchronisationssequenz, wobei ein erster Teil der Synchronisationssequenz vor den in dem Datenpaket enthaltenen Daten angeordnet ist und ein zweiter Teil der Synchronisationssequenz nach den in dem Datenpaket enthaltenen Daten angeordnet ist, und wobei das Datenpaket keinen Frequenzversatz aufweist;
- Fig. 5e: eine schematische Ansicht eines Datenpakets in komplexer Vektordarstellung mit einer Synchronisationssequenz, die zwischen den in dem Datenpaket enthaltenen Daten angeordnet ist, wobei das Datenpaket einen Frequenzversatz aufweist;
- Fig. 5f: eine schematische Ansicht eines Datenpakets in komplexer Vektordarstellung mit einer zweigeteilten Synchronisationssequenz, wobei ein erster Teil der Synchronisationssequenz vor den in dem Datenpaket enthaltenen Daten angeordnet ist und ein zweiter Teil der Synchronisationssequenz nach den in dem Datenpaket enthaltenen Daten angeordnet ist, und wobei das Datenpaket einen Frequenzversatz aufweist;
- Fig. 6: ein Flussdiagramm eines Verfahrens zum Betrieb einer Datensendeanordnung, gemäß einem Ausführungsbeispiel der vorliegenden Erfindung; und
- Fig. 7: ein Flussdiagramm eines Verfahren zum Betrieb eines Datenempfängers, gemäß einem Ausführungsbeispiel der vorliegenden Erfindung.

In der nachfolgenden Beschreibung der Ausführungsbeispiele der Erfindung werden in den Figuren gleiche oder gleichwirkende Elemente mit den gleichen Bezugszeichen versehen, so dass deren Beschreibung in den unterschiedlichen Ausführungsbeispielen untereinander austauschbar ist.

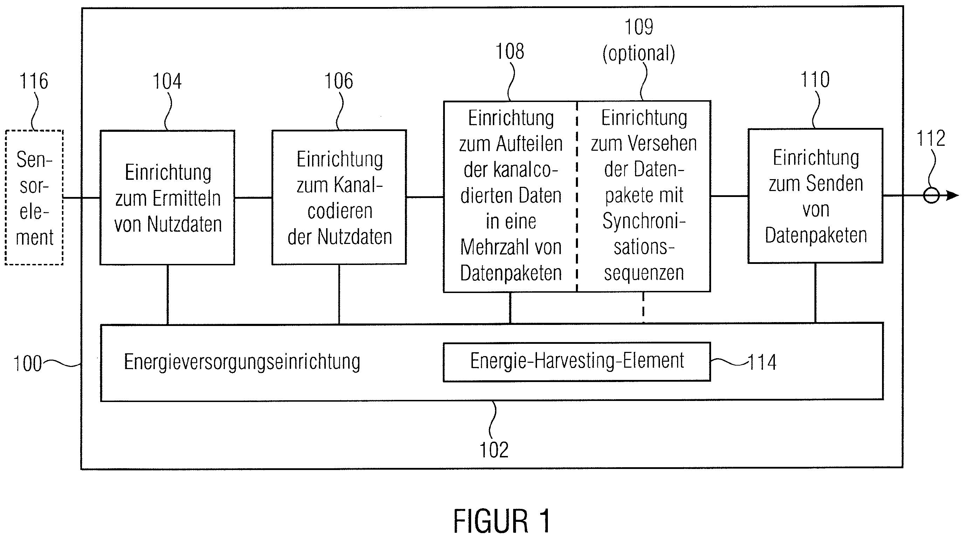

Fig. 1 zeigt ein schematisches Blockschaltbild einer Datensendeanordnung 100, gemäß einem Ausführungsbeispiel der vorliegenden Erfindung. Die Datensendeanordnung 100 umfasst eine Energieversorgungseinrichtung 102 zur Versorgung der Datensendeanordnung 100 mit elektrischer Energie.

Ferner umfasst die Datensendeanordnung 100 eine Einrichtung 104 zum Ermitteln von Nutzdaten, die von einem mit der Datensendeanordnung 100 verbundenen Sensorelement 116 bereitgestellt werden, eine Einrichtung 106 zum Kanalcodieren der Nutzdaten, um kanalcodierte Daten zu erhalten, und eine Einrichtung 108 zum Aufteilen der kanalcodierten Daten in eine Mehrzahl von Datenpaketen mit einer Coderate kleiner eins.

Des Weiteren umfasst die Datensendeanordnung 100 eine Einrichtung 110 zum Senden von Datenpaketen 112, die ausgebildet ist, um die Mehrzahl von Datenpaketen mit einem zeitlichen Abstand über einen Kommunikationskanal zu senden, sofern eine von der Energieversorgungseinrichtung 102 bereitstellbare elektrische Energiemenge zum Senden der jeweiligen Datenpakete mit einer Standardsendeleistung ausreichend ist. Dabei ist die Einrichtung 110 zum Senden von Datenpaketen 112 ausgebildet, um ein zum Senden anstehendes Datenpaket der Mehrzahl von Datenpaketen 112 mit einer reduzierten Sendeleistung zu senden, falls eine von der Energieversorgungseinrichtung 102 bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB (oder 1 dB, 3 dB, 6 dB, 9 dB, 10 dB, 12 dB, 15 dB, 18 dB, 21 dB, 24 dB oder 30 dB, 40 dB) reduziert ist, oder um ein zum Senden anstehendes Datenpaket der Mehrzahl von Datenpaketen 112 nicht zu senden oder verzögert zu senden, falls eine von der Energieversorgungseinrichtung 102 bereitstellbare elektrische Energiemenge zum Senden des jeweiligen Datenpakets nicht ausreichend ist, z.B. falls eine von der Energieversorgungseinrichtung 102 bereitstellbare elektrische Energiemenge kleiner ist als die zum Senden mit reduzierter Sendeleistung erforderliche elektrische Energiemenge.

Bei Ausführungsbeispielen werden die kanalcodierten Daten in eine Mehrzahl von Datenpaketen 112 aufgeteilt, die jeweils nur einen Teil der kanalcodierten Daten enthalten, so dass die Mehrzahl von Datenpaketen 112 jeweils kürzer sind als die kanalcodierten Daten bzw. als ein Telegramm, welches die kanalcodierten Daten enthält, und mit einem zeitlichen Abstand über einen Kommunikationskanal gesendet, sofern eine von der Energieversorgungseinrichtung 102 bereitstellbare elektrische Energiemenge hierfür ausreichend ist. Sollte die von der Energieversorgungseinrichtung 102 bereitstellbare elektrische Energiemenge hierfür hingegen nicht ausreichend sein, wird ein zum Senden anstehendes Datenpaket der Mehrzahl von Datenpaketen 112 in Abhängigkeit von der zur Verfügung stehenden elektrischen Energiemenge entweder mit reduzierter Sendeleistung gesendet oder nicht gesendet bzw. später gesendet (sofern zum späteren Zeitpunkt die von der Energieversorgungseinrichtung 102 bereitstellbare elektrische Energiemenge zum Senden mit Standardsendeleistung oder reduzierter Sendeleistung ausreichend ist).

Die Energieversorgungseinrichtung 102 kann einen Energiespeicher, wie z.B. eine Batterie oder einen Kondensator, aufweisen. Ferner kann die Energieversorgungseinrichtung 102 ein Energy-Harvesting-Element 114 zur leitungsungebunden Energiegewinnung aus der Umgebung der Datensendeanordnung 100 aufweisen. Bei der Verwendung einer kleinen Batterie (Knopfzelle) oder eines Energy-Harvesting-Elements 114 kann es sein, dass nicht genügend Energie zur Verfügung steht, um die vom Nutzer gewünschte Menge von Daten zu übertragen. In diesem Fall können beispielsweise einzelne Datenpakete eines Telegramms weggelassen werden.

Als Energy-Harvesting (dt. Energie-Ernten) wird eine Gewinnung von elektrischer Energie aus der Umgebung bezeichnet, d.h. die Umwandlung von der in der Umgebung vorhandenen (nicht elektrischen) Energie in elektrische Energie. Beispielsweise kann das Energy-Harvesting-Element 114 ausgebildet sein, um zur Energiegewinnung Verformungsenergie, Bewegungsenergie, Thermische Energie, Strömungsenergie, elektromagnetische Energie oder Lichtenergie in elektrische Energie umzuwandeln. Das Energy-Harvesting-Element 114 kann beispielsweise eine Solarzelle, einen thermoelektrischen Generator, einen piezoelektrischen Kristall, oder ein Peltier-Element umfassen.

Ferner kann die Energieversorgungseinrichtung 102 einen Energiespeicher zum Speichern der von dem Energy-Harvesting-Element 114 gewonnen Energie aufweisen. Der Energiespeicher, z.B. eine Batterie oder ein Kondensator, ist in der Regel nur für eine kurze, pulsartige (burstartige) Belastung ausgelegt bzw. geeignet.

In diesem Fall kann die Einrichtung 110 zum Senden von Datenpaketen 112 ausgebildet sein, um den zeitlichen Abstand mit dem die Datenpakete 112 gesendet werden derart zu wählen, dass eine Belastung des Energiespeichers der Energieversorgungseinrichtung 102 reduziert ist. Ferner kann die Einrichtung 108 zum Aufteilen der kanalcodierten Nutzdaten ausgebildet sein, um eine Anzahl von Datenpaketen 112, auf die die kanalcodierten Nutzdaten aufgeteilt werden, so zu wählen, dass eine Belastung des Energiespeichers der Energieversorgungseinrichtung 102 reduziert ist.

Durch den zeitlichen Abstand, mit denen die Datenpakete 112 über den Kommunikationskanal gesendet werden, und der Anzahl von Datenpaketen 112, auf die die kanalcodierten Nutzdaten, aufgeteilt werden (und damit der Länge der einzelnen Datenpakete), kann die Belastung des Energiespeichers beeinflusst bzw. gesteuert werden.

Darüber hinaus kann die Einrichtung 110 zum Senden von Datenpaketen 112 ausgebildet sein, um die Datenpakete 112 zur Reichweitenerhöhung schmalbandig mit einer Datenrate von weniger als 50 kbit/s, z. B. mit 40 kbit/s, 30 kbit/s, 20 kbit/s oder 10 kbit/s, statt z. B. mit einer Datenrate von 100 kbit/s über den Kommunikationskanal zu senden. Dadurch erhöht sich am Datenempfänger das SNR-Verhältnis (SNR = signal-to-noise ratio, Signalrauschverhältnis) und damit auch die Reichweite. Dies führt jedoch dazu, dass sich die Bitdauer und somit die ausgesendete Energie pro Bit erhöht, was einer kurzen, pulsartigen Belastung des Energiespeichers entgegenwirkt. Die erhöhte Belastung des Energiespeichers kann jedoch dadurch kompensiert werden, dass die kanalcodierten Daten in eine Mehrzahl von Datenpaketen 112 aufgeteilt und mit einem zeitlichen Abstand über den Kommunikationskanal gesendet werden, wobei die Datenpakete 112 jeweils kürzer sind als ein einziges Datenpaket (oder Telegramm) welches die (gesamten) kanalcodierten Daten enthält. Beispielsweise können die Mehrzahl von Datenpaketen 112 jeweils eine Länge von 20 Symbolen (oder 30, 40 oder 50 Symbolen) oder weniger aufweisen.

Die Nutzdaten, die von der Einrichtung 104 zum Ermitteln von Nutzdaten ermittelt werden, werden von einem mit der Sendeanordnung 100 verbundenen Sensorelement 116 bereitgestellt. Bei Ausführungsbeispielen kann das Sensorelement 116 teil der Datensendeanordnung 100 sein, oder mit anderen Worten, die Datensendeanordnung 100 kann das Sensorelement 116 aufweisen. Das Sensorelement 116 kann beispielsweise ein Temperatursensor, Zustandssensor, Heizungs- Strom oder Wasserzähler sein. Die Nutzdaten können somit ein Sensorwert, Zustand (z.B. Schalterstellung) oder Zählerstand sein. Die Nutzdaten können eine Datenmenge von weniger als 1 kbit aufweisen.

Die Nutzdaten, die von dem Sensorelement 116 bereitgestellt werden, können von der Einrichtung 106 zum Kanalcodieren der Nutzdaten kanalcodiert werden, um kanalcodierte Daten zu erhalten. Die Einrichtung 108 zum Aufteilen der kanalcodierten Daten kann ausgebildet sein, um die kanalcodierten Daten in eine Mehrzahl von Datenpaketen 112 aufzuteilen, so dass die Mehrzahl von Datenpaketen 112 jeweils nur einen Teil der kanalcodieren Daten aufweisen, oder mit anderen Worten, so dass die Mehrzahl von Datenpaketen 112 kürzer sind als ein einziges Datenpaket (oder Telegramm), welches die (gesamten) kanalcodierten Daten enthält. Die Einrichtung 110 zum Senden von Datenpaketen sendet anschließend die Mehrzahl von Datenpaketen 112 mit einem zeitlichen Abstand über den Kommunikationskanal, d.h. zwischen den Datenpaketen 112, hierin auch als Hop bezeichnet, sind Pausen (Sendepausen) vorhanden, in denen nicht gesendet wird.

Ferner kann die Einrichtung 110 zum Senden von Datenpaketen ausgebildet sein, um die Mehrzahl von Datenpaketen 112 auf unterschiedlichen Frequenzen zu senden (engl. frequency hopping). Die Einrichtung 110 zum Senden von Datenpaketen 112 kann z.B. die Mehrzahl von Datenpaketen 112 gleichzeitig auf mehreren (zumindest zwei) Frequenzen senden und/oder während dem Senden der Mehrzahl von Datenpaketen 112 die Sendefrequenz ändern bzw. variieren.

Bei Ausführungsbeispielen kann die Einrichtung 108 zum Aufteilen der kanalcodierten Daten in eine Mehrzahl von Datenpaketen 112 ausgebildet sein, um zumindest zwei der Datenpakete mit einer Synchronisationssequenz zur Synchronisation der Datenpakete in einem Datenempfänger zu versehen. Natürlich kann die Datensendeanordnung 100 auch eine Einrichtung 109 zum Versehen der Datenpakete mit Synchronisationssequenzen aufweisen. Dabei kann die Einrichtung 108 zum Aufteilen der kanalcodierten Daten in eine Mehrzahl von Datenpaketen 112 (oder die Einrichtung 109 zum Versehen der Datenpakete mit Synchronisationssequenzen) ausgebildet sein, um eine Anordnung der Synchronisationssequenzen in den zumindest zwei Datenpaketen zu variieren, so dass ein Datenpaket der zumindest zwei Datenpakete eine Anordnung der Synchronisationssequenz aufweist, die von der Anordnung der Synchronisationssequenz eines anderen Datenpakets der zumindest zwei Datenpakete abweicht.

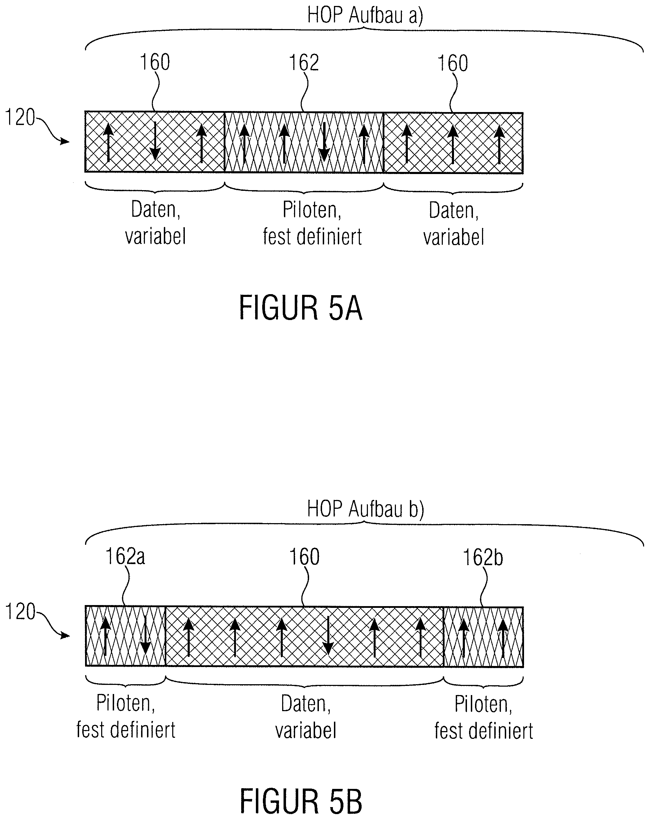

Beispielsweise kann die Einrichtung 108 zum Aufteilen der kanalcodierten Daten in eine Mehrzahl von Datenpaketen 112 ausgebildet sein, um ein erstes Datenpaket der zumindest zwei Datenpakete derart mit einer Synchronisationssequenz zu versehen, dass die Synchronisationssequenz an einem Anfang (oder einem Ende, oder aufgeteilt an einem Anfang und an einem Ende (siehe Fig. 5b)) des Datenpakets angeordnet ist, und um ein zweites Datenpaket der zumindest zwei Datenpakete derart mit einer Synchronisationssequenz zu versehen, dass die Synchronisationssequenz zwischen den kanalcodierten Daten, die das zweite Datenpaket enthält, angeordnet ist.

Natürlich kann die Einrichtung 108 zum Aufteilen der kanalcodierten Daten in eine Mehrzahl von Datenpaketen 112 auch ausgebildet sein, um jedes der Datenpakete mit einer Synchronisationssequenz zur Synchronisation der Datenpakete 112 in einem Datenempfänger zu versehen, und um eine Anordnung der Synchronisationssequenzen in den Datenpaketen 112 zu variieren, so dass zumindest ein Datenpaket der Datenpakete 112 eine Anordnung der Synchronisationssequenz aufweist, die von der Anordnung der Synchronisationssequenz eines anderen Datenpakets der Datenpakete 112 abweicht.

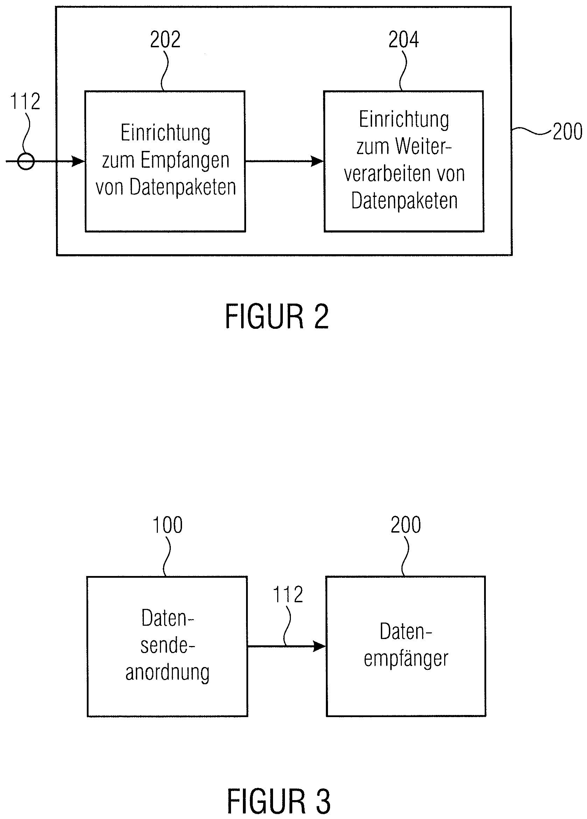

Fig. 2 zeigt ein schematisches Blockschaltbild eines Datenempfängers 200, gemäß einem Ausführungsbeispiel der vorliegenden Erfindung. Der Datenempfänger 200 weist eine Einrichtung 202 zum Empfangen von Datenpaketen 112 auf, wobei die Datenpakete 112 jeweils eine Coderate von weniger als eins aufweisen und mit einem zeitlichen Abstand über einen Kommunikationskanal gesendet werden. Dabei ist die Einrichtung 202 zum Empfangen von Datenpakten 112 ausgebildet, um die Datenpakete 112 in einem Empfangsdatenstrom zu ermitteln, um eine durch das Senden der Datenpakete 112 jeweils hervorgerufene Empfangsleistungsveränderung (oder Empfangsenergieveränderung) des Empfangsdatenstroms zu ermitteln, und um jedes der Datenpakete basierend auf der in der Einrichtung 202 zum Empfangen von Datenpaketen 112 hervorgerufenen Empfangsleistungsveränderung (oder Empfangsenergieveränderung) für eine Weiterverarbeitung zu gewichten, um empfangene Datenpakete zu erhalten. Ferner weist der Datenempfänger 200 eine Einrichtung 202 zum Weiterverarbeiten von empfangenen Datenpaketen auf, die ausgebildet ist, um eine von der Gewichtung der empfangenen Datenpakete abhängige Kanaldecodierung der empfangen Datenpakete durchzuführen, um in den Datenpaketen enthalte Nutzdaten zu ermitteln.

Bei Ausführungsbeispielen können bei der Übertragung der Datenpakete 112 über einen Kommunikationskanal von der Datensendeanordnung 100 zu dem Datenempfänger 200 Datenpakete gestört werden, beispielsweise durch Rauschen oder durch andere Datensender, die gleichzeitig im gleichen oder ähnlichem Frequenzband Datenpakete senden. Zum Herausfiltern gestörter Datenpakete ist die Einrichtung 202 zum Empfangen von Datenpaketen 112 ausgebildet, um die Empfangsleistungsveränderung des Empfangsdatenstroms, die durch das Senden der Datenpakete 112 in der Einrichtung 202 zum Empfangen von Datenpaketen 112 des Datenempfängers 200 jeweils hervorgerufen wird, zu ermitteln, um jedes der Datenpakete basierend auf der in der Einrichtung 202 zum Empfangen von Datenpaketen 112 hervorgerufenen Empfangsleistungsveränderung zu gewichten, so dass die Einrichtung 204 zum Weiterverarbeiten der Datenpakete eine von der Gewichtung abhängige Kanaldecodierung der empfangenen Datenpakete durchführen kann, um die in den Datenpaketen enthaltenen Nutzdaten zu ermitteln. Die durch das Senden der Datenpakete 112 jeweils hervorgerufene Empfangsleistungsveränderung des Empfangsdatenstroms wird also ermittelt und verwendet, um die Datenpakete für die oder in der Verarbeitung zu gewichten.

Die Einrichtung 204 zum Weiterverarbeiten der empfangenen Datenpakete kann dabei ausgebildet sein, um Datenpakete mit einer höheren Gewichtung bei der Kanaldecodierung stärker zu berücksichtigen als Datenpakete mit einer geringeren Gewichtung. Ein empfangenes Datenpaket kann also gewichtet in die Decodierung mit einfließen. Je höher die Empfangsleistung ist, desto stärker kann es bei der Decodierung gewichtet werden.

Die Einrichtung 202 zum Empfangen von Datenpaketen 112 kann ausgebildet sein, um diejenigen Datenpakete der Datenpakete 112 als empfangene Datenpakete weiterzuverarbeiten, dessen in der Einrichtung 202 zum Empfangen von Datenpaketen 112 hervorgerufenen Empfangsleistungsveränderung einen Schwellwert überschreiten, der so gewählt ist, dass die entsprechenden Datenpakete für eine Decodierung geeignet sind. Ferner kann die Einrichtung 202 zum Empfangen von Datenpaketen 112 ausgebildet sein, um diejenigen Datenpakete der Datenpakete 112 zu verwerfen, dessen in der Einrichtung 202 zum Empfangen von Datenpaketen 112 hervorgerufene Empfangsleistungsveränderung kleiner gleich des Schwellwerts ist.

Natürlich kann die Einrichtung 202 zum Empfangen von Datenpaketen 112 auch ausgebildet sein, um alle Datenpakete bei der Kanaldecodierung mit steigender Empfangsleistungsveränderung mit steigender Gewichtung zu berücksichtigen. Ferner kann die Einrichtung 202 zum Empfangen von Datenpaketen auch ausgebildet sein, um basierend auf der Empfangsleistungsveränderung eine Wahrscheinlichkeit zu bestimmen, mit der ein Datenpaket gesendet wurde, und um die Datenpakete jeweils basierend auf der Wahrscheinlichkeit zu gewichten. Selbstverständlich kann die Einrichtung 202 zum Empfangen von Datenpaketen 112 auch ausgebildet sein, um eine andere Charakteristika des Empfangsdatenstroms, z.B. spektrale Eigenschaften, auszuwerten, um zu bestimmen, ob ein Datenpaket gesendet wurde und mit welcher Gewichtung es bei der darauffolgenden Weiterverarbeitung / Kanaldecodierung zu berücksichtigen ist.

Die Einrichtung (202) zum Empfangen von Datenpaketen (112) kann ausgebildet sein, um diejenigen Datenpakete der Datenpakete (112) als empfangene Datenpakete weiterzuverarbeiten, dessen in der Einrichtung (202) zum Empfangen von Datenpaketen (112) hervorgerufene Empfangsleistungsveränderung einen Schwellwert überschreiten, der so gewählt ist, dass die entsprechenden Datenpakete für eine Decodierung (Kanaldecodierung) geeignet sind, und um diejenigen Datenpakete der Datenpakete (112) zu verwerfen, dessen in der Einrichtung zum Empfangen von Datenpaketen hervorgerufene Empfangsleistungsveränderung kleiner gleich des Schwellwerts ist.

Ferner kann die Einrichtung 202 zum Empfangen von Datenpaketen 112 ausgebildet sein, um anhand der Empfangsleistungsveränderung des Empfangsdatenstroms zu ermitteln, ob ein Datenpaket gesendet wurde und/oder um anhand der Empfangsleistungsveränderung des Empfangsdatenstroms zu ermitteln, ob ein gesendetes Datenpaket von einem Störer überlagert wurde. Die Einrichtung 202 zum Empfangen von Datenpaketen 112 kann also ausgebildet sein, um zu ermitteln, ob im Kanal (Übertragungskanal) ein anderer Teilnehmer sendet, z.B. durch Empfangsleistungsvergleich zum Empfang an anderen Zeitpunkten.

Des Weiteren kann die Einrichtung 202 zum Empfangen von Datenpaketen 112 ausgebildet sein, um eine Empfangsleistung des Empfangsdatenstroms vor dem Empfang des jeweiligen Datenpakets, während dem Empfang der jeweiligen Datenpakets und/oder nach dem Empfang des jeweiligen Datenpakets zu ermitteln, um die durch das Senden des jeweiligen Datenpakets hervorgerufene Empfangsleistungsveränderung des Empfangsdatenstroms zu ermitteln.

Bei Ausführungsbeispielen kann jedes der Datenpakete 112 mit einer Synchronisationssequenz zur Synchronisation des jeweiligen Datenpakets in dem Datenempfänger 200 versehen sein. In diesem Fall kann die Einrichtung 202 zum Empfangen von Datenpaketen 112 ausgebildet sein, um die Datenpakete 112 in dem Empfangsdatenstrom basierend auf den Synchronisationssequenzen zu lokalisieren, um die Datenpakete 112 in dem Empfangsdatenstrom zu ermitteln. Die Einrichtung 204 zum Weiterverarbeiten der empfangenen Datenpakete kann ausgebildet sein, um basierend auf den Synchronisationssequenzen der empfangenen Datenpakete die Gewichtung der empfangenen Datenpakete für die darauffolgende Weiterverarbeitung / Kanaldecodierung anzupassen. Ferner kann die Einrichtung 204 zum Weiterverarbeiten der empfangenen Datenpakete basierend auf den Synchronisationssequenzen der empfangenen Datenpakete diejenigen Datenpakete ermitteln und mit einer geringeren Gewichtung bei der Kanaldecodierung zu berücksichtigen (oder zu verwerfen), die für die Decodierung nicht oder weniger gut geeignet sind.

Fig. 3 zeigt ein schematisches Blockschaltbild eines Systems 300, gemäß einem Ausführungsbeispiel der vorliegenden Erfindung. Das System weist die in Fig. 1 gezeigte Datensendeanordnung 100 und den in Fig. 2 gezeigten Datenempfänger 200 auf.

Im Folgenden wird das in Fig. 3 gezeigte System 300 näher beschrieben. Die nachfolgende Beschreibung ist jedoch genauso auf die in Fig. 1 gezeigte Datensendeanordnung 100 und den in Fig. 2 gezeigten Datenempfänger 200 anwendbar.

Wie bereits oben beschrieben, weist die Energieversorgungseinrichtung 102 der Datensendeanordnung 100 ein Energie-Harvesting-Element 114 auf. Bei Sendern 100, die Ihre Energie über ein Energie-Harvesting-Element 114 (bzw. mittels eines Energie-Harvesting-Verfahrens) aus der Umwelt, z.B. über Licht, Temperaturunterschiede oder Vibrationen, ziehen ist unter Umständen keine konstante Energieversorgung möglich. Gleiches kann auch für Datensendeanordnungen 100 gelten, die Batteriebetrieben sind, bei denen aber nur eine begrenzte Energiemenge pro Zeit entnommen werden kann. Um mit dieser variablen Energieversorgung arbeiten zu können, werden bei Ausführungsbeispielen die kanalcodierten Daten in eine Mehrzahl von Datenpaketen 112 aufgeteilt und mit einem zeitlichen Abstand über einen Kommunikationskanal gesendet. Zusätzlich können Datenpakete 112 je nach Energieversorgung nicht oder mit geringerer Sendeleistung übertragen werden. Ausführungsbeispiele beschreiben ebenfalls Lösungsansätze, wie die Datensendeanordnungen 100 mit fehlenden oder gestörten Paketen dann synchronisiert und detektiert (kanaldekodiert) werden können. Dies kommt insbesondere dann zur Anwendung, wenn viele Datensendeanordnungen 100 gleichzeitig senden und sich gegenseitig stören oder wenn andere Systeme im gleichen Frequenzband arbeiten und stören.

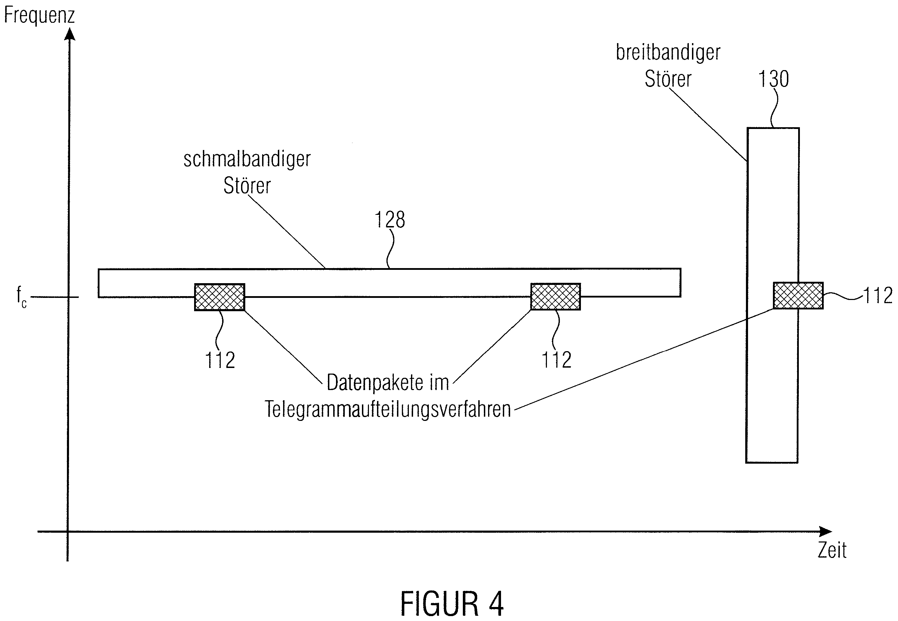

Fig. 4 zeigt in einem Diagramm eine spektrale Belegung des Übertragungskanals über den die Datenpakete übertragen werden aufgetragen über die Zeit. Um einen Störer zu detektieren unterscheidet man zunächst zwischen einen schmalbandigen Störer 128 mit einer ähnlichen Bandbreite von ca. 1 kBit/s oder weniger und breitbandigen Störeren 130 mit größerer Bandbreite als 1 kBit/s. Da schmalbandige Übertragungssysteme in der Regel kein Telegrammaufteilungsverfahren (engl. telegramm splitting (TS)) verwenden, ist die Senderdauer eines zu übertragenden Datenpakets wesentlich länger als bei dem Telegrammaufteilungsverfahren. Deshalb kann durch Messung der Empfangsleistung vor und/oder nach einem TS Datenpaket 112 detektiert werden, ob ein anderes Datenpaket von einem anderen Sender oder System gesendet wurde. Ist eine Empfangsleistung auf der gleichen Frequenz vor und/oder nach dem TS Datenpaket 112 vorhanden, so liegt ein Störsignal vor und das TS Datenpaket 112 wird nicht weiter für die Dekodierung verwendet.

Da der schmalbandige Störer eine Frequenzabweichung gegenüber den TS Datenpaket aufweisen kann, kann durch Messung der Empfangsleistung bei der Sendefrequenz fc des TS Datenpakets 112 eine wegen des Frequenzversatzes geringere Empfangsleistung gemessen werden, als tatsächlich vom Störer erzeugt wird Deshalb kann es sinnvoll sein auch in den Nachbarfrequenzbereichen des TS Datenpakets 112 die Empfangsleistung zu bestimmen. Dies kann insbesondere auch bei breitbandigen Störern 130 von Vorteil sein. Breitbandige Störer 130 mit höherer Datenrate belegen im Spektrum eine größere Frequenzbandbreite. Allerdings sind die gesendeten Datenpakete aufgrund der höhreren Datenrate bei gleicher Datenmenge im Vergleich zu schmalbandigen Übertragungssystemen wesentlich kürzer in der Zeit. Im schlechtesten Fall sind die Datenpakete gleich lang oder kürzer als Datenpaket 112 im TS Verfahren. Dann kann es vorkommen, dass durch eine Messung der Empfangsleistung vor oder nach dem TS Datenpaket 112 kein Störer ermittelt werden kann. Durch die Messung der Empfangsleistung während des TS Datenpakets 112 in dem Frequenzbereichen unmittelbar neben den TS Datenpaket 112 kann dann ein breitbandiger Störer ermittelt werden.

Bei Ausführungsbeispielen sendet die Datensendeanordnung (Sender) 100 mit limitierter Energieversorgung im Telegrammaufteilungsverfahren (engl. telegram splitting (TS)), oder mit anderen Worten, die kanalcodierten Daten (Telegramm) werden in eine Mehrzahl von Datenpakten 112 aufgeteilt und mit einem zeitlichen Abstand über einen Kommunikationskanal gesendet. Bei nicht ausreichender Energie werden einzelne Datenpakete 112 nicht gesendet oder einfach mal mit reduzierter Sendeleistung gesendet. Im Datenempfänger 200 können ungestört oder nur leicht gestörte empfangene Datenpakete (Pakete) 112 aus dem Empfangsdatenstrom herausgefiltert und kanaldecodiert werden. Gestörte Datenpakete können nicht oder nur mit geringerer Gewichtung berücksichtigt werden. Ferner kann im Datenempfänger 200 bestimmt werden, ob und/oder mit welcher Wahrscheinlichkeit ein Datenpaket von der Datensendeanordnung 100 gesendet wurde und ob dieses Datenpaket (Sendepaket oder Subpaket) gestört wurde. Wenn das Datenpaket (Sendepaket) 112 ungestört ist, dann wird es verwendet, ansonsten nicht oder mit einer geringeren Gewichtung, wodurch das Ergebnis der Kanaldekodierung verbessert werden kann. Zur Bestimmung ob Datenpakete (Subpakete) 112 bei der Übertragung über den Kommunikationskanal gestört wurden kann im Datenempfänger 200 die Empfangsleistung des Empfangsdatenstroms vor dem Empfang der jeweiligen Datenpakete und nach dem Empfang der jeweiligen Datenpakete gemessen werden und zusätzlich in Relation zueinander und in Relation zur Empfangsenergie der jeweiligen Datenpakete (empfangene Subpaketenergie) gesetzt werden. Zusätzlich kann anhand der Datenpakete (Subpakete) 112, insbesondere der Synchronisationssequenzen (Piloten), eine Störung ermittelt werden. Ferner können die Empfangsenergien verschiedener Datenpakete 112 auf der gleichen Frequenz oder auf benachbarten Frequenzen verglichen werden. Darüber hinaus kann eine Kontinuität der Empfangsleistung innerhalb des jeweiligen Datenpakets (Subpakets) 112 überwacht werden. Beispielsweise kann die EVM-Messung (EVM = error vector magnitude, dt. Betrag des Fehlervektors) verwendet werden, mittels der überprüft werden kann, ob der empfangene Konstellationspunkt dem erwarteten Konstellationspunkt entspricht. Aufgrund der kurzen Datenpakete 112 ist die Wahrscheinlichkeit hoch, dass Störpakete länger sind. Anders als bei heute verwendeten Verfahren wird das Telegramm unterbrochen, was eine Messung der Störleistung zwischen den Datenpaketen (Paketen) 112 erlaubt. Um die Sendezeitpunkte genau zu ermitteln, bedarf es einer guten Synchronisation.

Für Fehlerschutzcodes ist es sehr vorteilhaft, wenn bekannt ist, ob und wie stark empfangene Symbole gestört sind. Die gestörte Information in den Symbolen zu verwerfen kann viel besser sein, als diese zu verwenden. In der Nachrichtentechnik gibt es hier die Beschreibung in LogLikelihoodRations, die die Sicherheit von Information angibt. Fehlerschutzcodes, wie z.B. Convolutional Codes; Reed Solomon Codes oder auch Turbo Codes, können Telegramme (Empfangspakete) mit einer größeren Menge fehlender Symbole wieder herstellen, wenn bekannt ist, welche Symbole gestört wurden, als mit gestörten Symbolen, bei denen nicht bekannt ist, dass eine Störung vorlag. Um zu ermitteln, wie sicher die empfangenen Informationen sind, werden bei Ausführungsbeispielen nicht nur während des Hops (bzw. der Datenpakete) 112 Daten aufgezeichnet, sondern auch etwas vorher und nachher. Diese vorher/nachher Information wird mit zur Schätzung der Symbolsicherheit verwendet. Wenn z.B. vorher und nachher der Leistungspegel auf der Empfangsfrequenz im Vergleich zum durchschnittlichen Leistungspegel auf der Empfangsfrequenz hoch ist, kann die Stärke einer Störung durch Störer (engl. interferer), die z.B. von anderen Sendern herrühren, abgeschätzt werden.

Falls das System 300 nur einen Empfänger 200 umfasst und Frequenzhopping verwendet, ist es dazu nötig, Sendepausen zwischen den Hops (Datenpaketen) 112 zu machen und am Datenempfänger 300 diese Pausen ganz oder teilweise zu nutzen, um zu erkennen, ob ein Störer (engl. interferer) aktiv ist. Dieses wird mit dem TS-Verfahren angewendet und im beschriebenen Verfahren ausgewertet. Damit kann geschätzt oder erkannt werden, ob und wie stark die empfangenen Symbole gestört sind und verwendet werden können. Im Extremfall nimmt der TS-Empfänger 200 nur die Datenpakete (Subpakete) 112, die mit hoher Wahrscheinlichkeit nicht gestört waren.

Wird ein Telegramm kontinuierlich übertragen, so ist es, besonders bei dem kleinen Datenpaketen (Subpaketen) 112, die durch das TS-Verfahren ermöglicht werden, nicht ohne weiteres möglich, zu detektieren, wo Störer (engl. interferer), die eine Leistung ähnlich des Nutzsignals oder sogar kleiner als die des Nutzsignals haben, dieses Nutzsignal überlagern und somit stören (starke Störer sind leichter zu detektieren, da hier der Signalpegel stark steigt, dieses kann auch während ein Nutzsignal empfangen wird, festgestellt werden). Damit können die gestörten Telegrammsymbole nicht gut verworfen oder als gestört erkannt werden. Wenn nur eine begrenzte Sendeenergie zur Verfügung steht, wird für die Übertragung das TS-Verfahren verwendet und so die Leistungsfähigkeit des Übertragungssystems erhöht, da in den Sendepausen keine Sendeenergie verbraucht wird, der Empfänger 200 aber dort den Zustand des Kanals, also ob Störer (engl. interferer) aktiv sind, feststellen kann. Umso mehr das Telegramm in Datenpakete (Teilpakete) 112 zerlegt wird, umso genauer kann der Kanalzustand für das Datenpaket (Teilpaket) 112 geschätzt werden, da das Datenpaket (Teilpaket) 112 selbst kleiner wird und dadurch die Wahrscheinlichkeit sinkt, dass während der Dauer des Datenpakets (Teilpakets) 112 sich der Kanalzustand ändert, also ein Störer (engl. interferer) zu senden anfängt. Für Sensorknoten, die eine Energie-Harvesting-Stromquelle verwenden, lässt sich das TS-Verfahren sehr vorteilhaft anwenden. Zum einen können kleinere Pakete gesendet werden, für die weniger Energie zwischenspeichert werden muss (siehe DE 10 2011 082 098 A1). Zum anderen ist es möglich, falls gerade keine Sendeenergie zur Verfügung steht, einfach einen Hop 112 nicht oder mit geringerer Leistung zu senden. Beispielsweise durch Vergleich der Sendeenergie auf dem Kanal vor/nach dem eigentlichen Hop Zeitschlitz. Hierzu kann die Signalleistung Pv vor dem Zeitschlitz, an dem ein Hop 112 ankommen sollte, die Signalleistung Pw während dem Zeitschlitz, an dem ein Hop 112 ankommen sollte und die Signalleistung Pn nach dem Zeitschlitz, an dem ein Hop 112 ankommen sollte, gemessen werden. Ist nun Pw höher als Pv und Ph, so kann der Datenempfänger 200 davon ausgehen, dass die Datensendeanordnung den Hop (bzw. das Datenpaket) 112 gesendet hat.

Falls die Datensendeanordnung 100 (Sensorknoten) nur einen Hop nicht gesendet hat, kann der Datenempfänger 200 dieses erkennen (ggf. nur die Wahrscheinlichkeit, dass die Datensendeanordnung 100 nicht gesendet hat), und diese Information in der Vorwärtsfehlerkorrektur (engl. forward error correction) verwenden. Wenn eine Vorwärtsfehlerkorrektur verwendet wird, oder sogar noch spezifischer ein sogenannter Erasure Code (das sind Codes, die sehr gut mit fehlenden Teilen von Information umgehen können; normale Convolutional Codes sind hier verwendbar, aber auch spezielle Codes wie die Fountain Codes), dann kann der Datenempfänger 200 das Telegramm (Empfangspaket) rekonstruieren, falls genügend andere Symbole empfangen wurden. Hat der Empfänger 200 genügend Symbole, kann er versuchen, zu dekodieren.

Um ein gesendetes Telegramm zu detektieren (d.h. die Frequenz bzw. den Zeitpunkt des Hopping-Musters zu finden), ist es bei passender Empfindlichkeit der Detektion nicht unbedingt nötig, alle Synchronisations-Hops (falls dedizierte Hops mit Synchronisationsinformation verwendet werden) und/oder alle Daten-Hops mit Piloten zu empfangen. Durch passende Wahl der Detektionsschwelle und die Aussendung genügend vieler Synchronisations-Hops bzw. Daten-Hops mit Piloten kann die Detektion auch Sendeanordnungen 100 (Sensorknoten) empfangen, die aus Energiegründen einige Hops 112 nicht senden. Wichtig an dieser Stelle ist, dass ein Hop 112 alleine nicht für die Detektion reicht, es werden mehrere Hops 112 ausgewertet um mit dem empfangenen Muster von Synchronisations-Hops oder Piloten in Daten-Hops ein Telegramm zu detektieren.

Im Folgenden wird eine Vereinfachung und/oder Verbesserung der Synchronisation beschrieben.

In einigen oder allen Hops 112 kann ein Synchronisationsmuster (engl. sync pattern) (sogenannte Pilotsymbole) übertragen werden. Bei Ausführungsbeispielen wird das Synchronisationsmuster (engl. sync pattern) durch zwei oder mehrere verschiedene Anordnungen der Piloten abgewechselt.

Fig. 5a zeigt eine schematische Ansicht eines Datenpakets 112 mit einer Synchronisationssequenz 162, die zwischen den in dem Datenpaket 112 enthaltenen Daten 160 angeordnet ist (Hop Aufbau a)). Fig. 5a zeigt dabei das Datenpaket 112 (Empfangssignal) in komplexer Vektordarstellung.

Fig. 5b zeigt eine schematische Ansicht eines Datenpakets 112 mit einer zweigeteilten Synchronisationssequenz 162a und 162b, wobei ein erster Teil der Synchronisationssequenz 162a vor den in dem Datenpaket 112 enthaltenen Daten 160 angeordnet ist und ein zweiter Teil der Synchronisationssequenz 162b nach den in dem Datenpaket 112 enthaltenen Daten 160 angeordnet ist (Hop Aufbau b)). Fig. 5b zeigt dabei das Datenpaket 112 (Empfangssignal) in komplexer Vektordarstellung.

Mit der in Fig. 5a gezeigten Anordnung der Synchronisationssequenz kann eine Synchronisation bei einem Frequenzoffset leichter durchgeführt werden, da die Phase durch Frequenzoffset sich zwischen den Pilotsymbolen nicht so stark ändert. Mit der in Fig. 5b gezeigten Anordnung der Synchronisationssequenz kann der Frequenzoffset besser geschätzt werden, da die Phase sich stärker ändert.

Damit kann die in Fig. 5a gezeigte Anordnung der Synchronisationssequenz besser zur initialen Synchronisation, z.B. durch Korrelation, verwendet werden, während die in Fig. 5b gezeigte Anordnung der Synchronisationssequenz besser zur Frequenzschätzung verwendet werden kann. Die Kenntnis des genauen Frequenzoffsets ermöglicht u.a. die Verwendung von effizienten Modulationsarten.

Die Piloten können auch zur Kanalentzerrung verwendet werden. Wird eine einfache Entzerrung verwendet, die nur die Phase benötigt (z.B. bei MSK Modulation (MSK = minimum shift keying, ein spezielles Verfahren der Frequenzumtastung), dann stört die unterschiedliche Anordnung der Piloten nicht, da diese für die Phasenschätzung unerheblich ist.

Bei Ausführungsbeispielen können nicht nur die Position der Piloten sondern auch die Piloten selbst in den Hops 112 variiert werden. Wird ein Pilotenmuster (Inhalt der Piloten, nicht die Anordnung) verwendet, welches nur einen schmalen Spektralbereich belegt, so kann dieses durch weniger Rechenaufwand gefunden werden, als ein Pilotenmuster, welches einen breiten Spektralbereich einnimmt. Werden z.B. in einigen Hops 112 Piloten verwendet, die gleich sind, lassen sich diese über eine sogenannte gleitendende Summe (engl. moving sum) mit wenig Rechenaufwand finden. Allerdings ist die Bestimmung des genauen Synchronisationszeitpunktes mit einem solchen Pilotenmuster nicht gut möglich. Um den Synchronisationszeitpunkt genauer zu bestimmen, wird dann in anderen Hops 112 ein geeignetes Pilotenmuster mit breiterem Spektralbereich verwendet. Dabei wird ggf. keine Energie für die Synchronisation extra verschwendet, da die Piloten auch oder sowieso für die Kanalentzerrung verwendet werden.

Zur Synchronisation kann nicht nur ein einzelner Hop 112 betrachtet werden, sondern mehrere, da ein bekanntes Hopping-Muster verwendet wird.

Dazu wird davon ausgegangen, dass die Frequenz sich über die Hops 112 nicht oder nur wenig ändert. Um die Synchronisation robuster zu machen, wird die vorgeschlagene Schätzung des Kanalzustands verwendet.

Im Folgenden werden die Vorteile der Aufteilung des Synchronisationssequenzen (Piloten) näher erläutert.

Durch Ungenauigkeiten in den Oszillatoren kommt es zwischen dem Sender 100 und dem Empfänger 200 zu einem Frequenzversatz. Bei einem 10 ppm Oszillator sind dieses bereits etwa ± 8.7 kHz bei einer Sendefrequenz von 868 MHz. Überträgt man nun, wie in der skizzierten Anwendung, sehr schmalbandige Signale, wie z.B. mit 1 kHz Symbolrate, so liegt die Symbolrate bereits weit unter der Frequenz, um die das Empfangssignal gegenüber dem Sendesignal verschoben ist.

Eine Lösung, um die Signale trotzdem detektieren zu können, ist, dass der Empfänger auf mehreren benachbarten schmalbandigen Frequenzbändern gleichzeitig empfängt und versucht, das Signal des Senders zu finden.

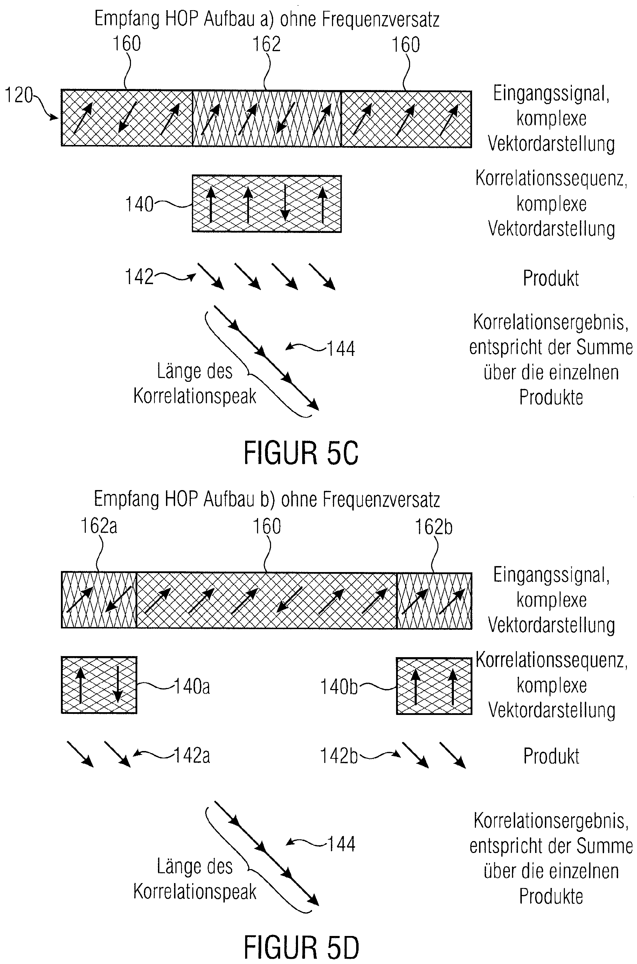

Fig. 5c zeigt eine schematische Ansicht eines Datenpakets 112 in komplexer Vektordarstellung mit einer Synchronisationssequenz 162, die zwischen den in dem Datenpaket 112 enthaltenen Daten 160 angeordnet ist (Hop Aufbau a)), wobei das Datenpaket 112 (Empfangssignal) keinen Frequenzversatz aufweist. Wie in Fig. 5c zu erkennen ist, weist das Empfangssignal 112 eine Phasendrehung gegenüber dem Sendesignal entsprechend Hop Aufbau a) (Fig. 5a) auf, da Sender 100 und Empfänger 200 nicht phasensynchron Arbeiten.

Ferner ist in Fig. 5c die Korrelationssequenz 140 in komplexer Vektordarstellung, das Produkt 142 aus der Synchronisationssequenz 162 und der Korrelationssequenz 140, und das Korrelationsergebnis 144, welches der Summe über die einzelnen Produkte entspricht, dargestellt.

Korreliert man das Signal Hop Aufbau a) im Fall ohne Frequenzversatz (Fig. 5c) direkt mit der Pilotenfrequenz, ergibt sich bei genauer zeitlicher Übereinstimmung ein hoher Korrelationspeak. Diesen Korrelationspeak kann der Empfänger 200 verwenden, um zu detektieren, dass hier ein Hop 112 übertragen wurde, bzw. kann er die Kombination von Korrelationspeaks mehrerer Hops 112 verwenden, dieses zu detektieren.

Fig. 5d zeigt eine schematische Ansicht eines Datenpakets 112 in komplexer Vektordarstellung mit einer zweigeteilten Synchronisationssequenz 162a und 162b, wobei ein erster Teil der Synchronisationssequenz 162a vor den in dem Datenpaket 112 enthaltenen Daten 160 angeordnet ist und ein zweiter Teil der Synchronisationssequenz 162b nach den in dem Datenpaket 112 enthaltenen Daten 160 angeordnet ist (Hop Aufbau b), und wobei das Datenpaket 112 (Empfangssignal) keinen Frequenzversatz aufweist. Analog zu Fig. 5c weist auch das in Fig. 5d gezeigte Empfangssignal 112 eine Phasendrehung gegenüber dem Sendesignal entsprechend Hop Aufbau b) (Fig. 5b) auf, da Sender 100 und Empfänger 200 nicht phasensynchron Arbeiten.

Ferner ist in Fig. 5d die zweigeteilte Korrelationssequenz 140a und 140b jeweils in komplexer Vektordarstellung, die Produkte 142a und 142b aus den Synchronisationssequenzen 162a und 162b und den Korrelationssequenzen 140a und 140b, und das Korrelationsergebnis 144, welches der Summe über die einzelnen Produkte entspricht, dargestellt.

Kommt es zu einem Frequenzversatz zwischen dem Sender 100 und dem Empfänger 200, so wird der Korrelationspeak sinken, da die einzelnen Produkte von Empfangssignal zu Korrelationssequenz in der Phase voneinander abweichen werden, wie im Folgenden näher erläutert wird.

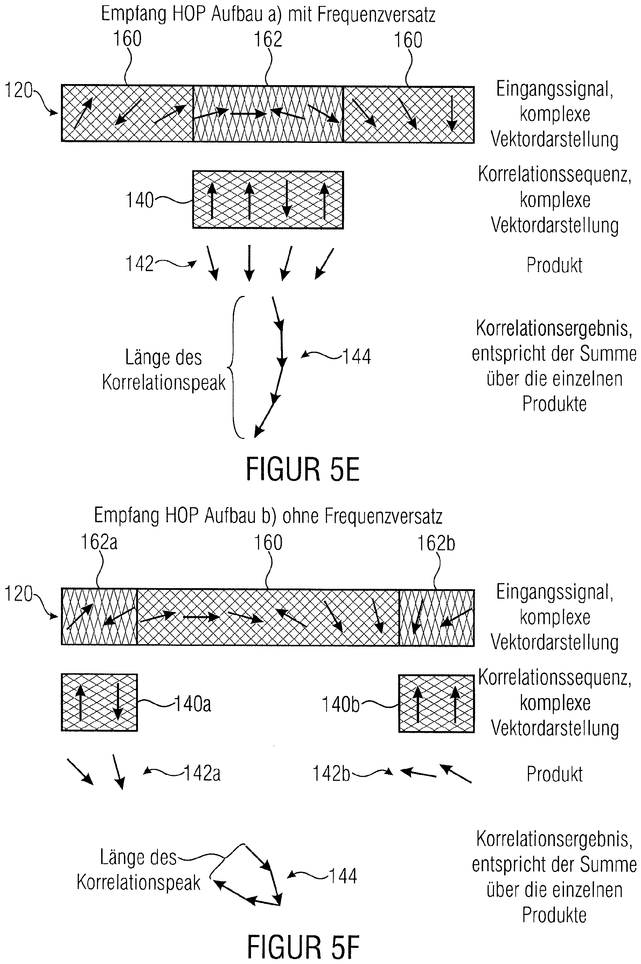

Fig. 5e zeigt eine schematische Ansicht eines Datenpakets 112 mit einer Synchronisationssequenz 162, die zwischen den in dem Datenpaket 112 enthaltenen Daten 160 angeordnet ist (Hop Aufbau a)), wobei das Datenpaket 112 (Empfangssignal) einen Frequenzversatz aufweist.

Ferner ist in Fig. 5e die Korrelationssequenz 140 in komplexer Vektordarstellung, das Produkt 142 aus der Synchronisationssequenz 162 und der Korrelationssequenz 140, und das Korrelationsergebnis 144, welches der Summe über die einzelnen Produkte entspricht, dargestellt.

Wie in Fig. 5e zu erkennen ist, ist der Korrelationspeak in diesem Fall geringfügig kleiner geworden. Somit ist diese Pilotenanordnung robust gegenüber Frequenzversatz. Damit muss der Empfänger 200 auf weniger Frequenzen gleichzeitig das Sendesignal suchen.

Allerdings bedeutet die Robustheit gegen Frequenzversatz gleichzeitig auch einen Nachteil. Es ist nicht möglich, den tatsächlichen Frequenzversatz mit diesen Piloten gut zu schätzen, da ein Frequenzversatz sich ja eben nicht stark auswirkt. Kann der Frequenzversatz nicht genau geschätzt werden, so ist dieses für die Dekodierung von vielen Modulationsarten von Nachteil, da diese mit steigendem nicht korrigiertem Frequenzversatz eine schlechtere Leistungsfähigkeit aufweisen, als bei einer genauen Korrektur. Für diese genaue Korrektur wird eben eine genaue Schätzung des Frequenzversatzes benötigt.

Bei der Pilotenanordnung nach Hop Aufbau b) ist dieses anders, hier ist die stärkst mögliche Abweichung des Korrelationspeaks bei Frequenzversatz gegeben, wie dies aus Fig. 5f hervorgeht.

Fig. 5f zeigt eine schematische Ansicht eines Datenpakets 112 in komplexer Vektordarstellung mit einer zweigeteilten Synchronisationssequenz 162a und 162b, wobei ein erster Teil der Synchronisationssequenz 162a vor den in dem Datenpaket 112 enthaltenen Daten 160 angeordnet ist und ein zweiter Teil der Synchronisationssequenz 162b nach den in dem Datenpaket 112 enthaltenen Daten 160 angeordnet ist (Hop Aufbau b), und wobei das Datenpaket 112 (Empfangssignal) einen Frequenzversatz aufweist.

Ferner ist in Fig. 5f die zweigeteilte Korrelationssequenz 140a und 140b jeweils in komplexer Vektordarstellung, die Produkte 142a und 142b aus den Synchronisationssequenzen 162a und 162b und den Korrelationssequenzen 140a und 140b, und das Korrelationsergebnis 144, welches der Summe über die einzelnen Produkte entspricht, dargestellt.

Damit kann der Frequenzversatz gut geschätzt werden, in dem Fall von Frequenzversatz ergibt sich ein viel geringerer Korrelationspeak als mit Hop Aufbau a).

Verbesserungen und Vorteile gegenüber dem Stand der Technik ist, dass der Empfänger mit (geringerer) Rechenleistung dieses Sendesignal 112 detektieren und trotzdem den Frequenzversatz genau schätzen kann.

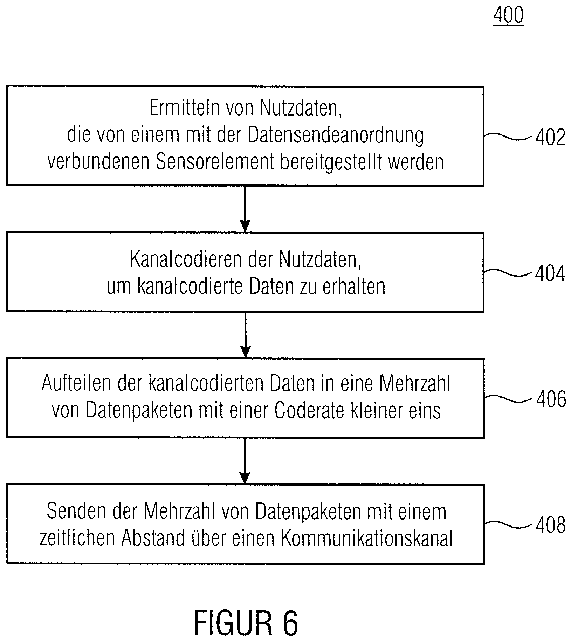

Fig. 6 zeigt ein Flussdiagramm eines Verfahrens 400 zum Betrieb einer Datensendeanordnung 100, gemäß einem Ausführungsbeispiel der vorliegenden Erfindung. Die Datensendeanordnung 100 weist eine Energieversorgungseinrichtung 102 zur Versorgung der Datensendeanordnung 100 mit elektrischer Energie auf. Das Verfahren umfasst Ermitteln 402 von Nutzdaten, die von einem mit der Datensendeanordnung 100 verbundenen Sensorelement 116 bereitgestellt werden; Kanalcodieren 404 der Nutzdaten, um kanalcodierte Daten zu erhalten; Aufteilen 406 der kanalcodierten Daten in eine Mehrzahl von Datenpaketen mit einer Coderate kleiner eins; Senden 408 der Mehrzahl von Datenpaketen 112 mit einem zeitlichen Abstand über einen Kommunikationskanal, sofern eine von der Energieversorgungseinrichtung 102 bereitstellbare elektrische Energiemenge zum Senden der jeweiligen Datenpakete 112 mit einer Standardsendeleistung ausreichend ist. Dabei umfasst das Senden 408 der Mehrzahl von Datenpaketen 112 Senden eines anstehenden Datenpakets der Mehrzahl von Datenpaketen 112 mit einer reduzierten Sendeleistung, falls eine von der Energieversorgungseinrichtung 102 bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40dB reduziert ist; und/oder Senden eines anstehendes Datenpakets der Mehrzahl von Datenpaketen 112 nicht oder verzögert, falls eine von der Energieversorgungseinrichtung 102 bereitstellbare elektrische Energiemenge zum Senden des jeweiligen Datenpakets nicht ausreichend ist.

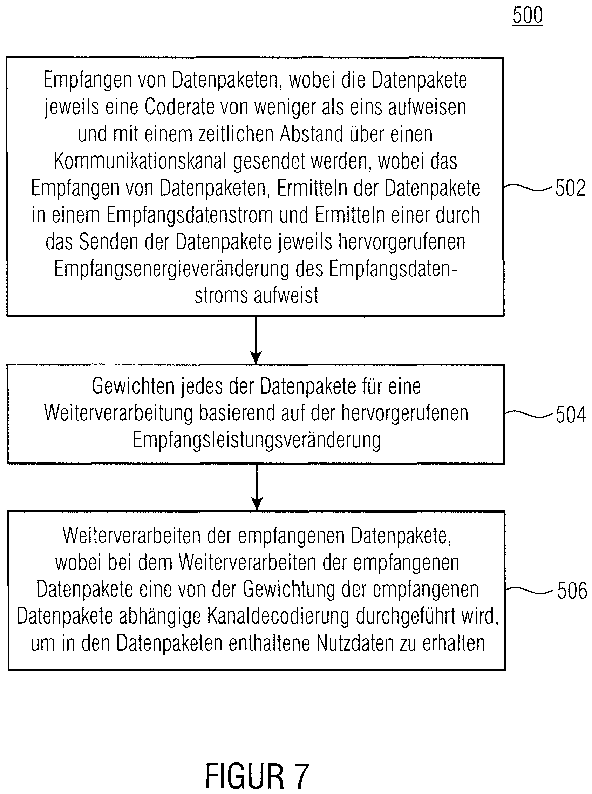

Fig. 7 zeigt ein Flussdiagramm eines Verfahrens 500 zum Betrieb eines Datenempfängers 200. Das Verfahren 500 umfasst Empfangen 502 von Datenpaketen 112, wobei die Datenpakete 112 jeweils eine Coderate von weniger als eins aufweisen und mit einem zeitlichen Abstand über einen Kommunikationskanal gesendet werden, wobei das Empfangen 502 von Datenpaketen 112, Ermitteln der Datenpakete 112 in einem Empfangsdatenstrom und Ermitteln einer durch das Senden der Datenpakete 112 jeweils hervorgerufenen Empfangsleistungsveränderung des Empfangsdatenstroms aufweist. Ferner umfasst das Verfahren 500 Gewichten 504 jedes der Datenpakete für eine Weiterverarbeitung basierend auf der hervorgerufene Empfangsleistungsveränderung, um empfangene Datenpakete zu erhalten. Ferner umfasst das Verfahren 500 Weiterverarbeiten 506 der empfangenen Datenpakete, wobei bei dem Weiterverarbeiten der empfangenen Datenpakete eine von der Gewichtung der empfangenen Datenpakete abhängige Kanaldecodierung durchgeführt wird, um in den Datenpaketen enthaltene Nutzdaten zu erhalten.

Ausführungsbeispiele der vorliegenden Erfindung erlauben es den Sendebetrieb einer Sendeanordnung 100 auf die jeweils verfügbare Energie anzupassen und trotzdem die Übertragungssicherheit nur geringfügig einzuschränken. Der Datenempfänger 200 kann mit weniger Rechenleistung dieses Sendesignal synchronisieren und trotzdem den Frequenzoffset genau schätzen.

Ausführungsbeispiele beziehen sich auf ein drahtloses Verfahren für Datensendeanordnungen (Kleinsender) 100 mit Energie-Harvesting, bei dem die zu übertragenden Daten in kleine Datenpakete (Subpakete) 112 aufgeteilt werden. Einzelne Datenpakete 112 können bei zu geringer Energieversorgung mit geringerer Leistung oder überhaupt nicht ausgesendet werden. Der Datenempfänger 200 erkennt, wenn Datenpakete 112 fehlen oder gestört sind und verwirft sie, um so das Ergebnis der Kanaldekodierung zu verbessern.

Ausführungsbeispiele befassen sich mit einem System 300 zur Übertragung von kleinen Datenmengen von einer großen Anzahl von Sendeanordnungen (Knoten) 100, z.B. Sensordaten wie etwa von Heizungs-, Strom- oder Wasserzählern, zu einem Datenempfänger (Basisstation) 200 hin. Ein Datenempfänger (Basisstation) 200 empfängt (und möglicherweise steuert) dabei eine große Anzahl von Sendeanordnungen (Knoten) 100. Im Datenempfänger (Basisstation) 200 steht mehr Rechenleistung und auch eine komplexere Hardware, d.h. im Allgemeinen auch ein Empfänger 202 mit höherer Leistungsfähigkeit, zur Verfügung. In den Sendeanordnungen (Knoten) 100 werden günstige Quarze, die meistens einen Frequenzoffset von 5 ppm, 10 ppm oder mehr aufweisen, verwendet. Ausführungsbeispiele befassen sich mit dem drahtlosen Übertragungsverfahren, das auch auf andere Anwendungsgebiete übertragen werden kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensendeanordnung (100), mit folgenden Merkmalen:
einer Energieversorgungseinrichtung (102) zur Versorgung der Datensendeanordnung (100) mit elektrischer Energie;
einer Einrichtung (104) zum Ermitteln von Nutzdaten, die von einem mit der Datensendeanordnung (100) verbundenen Sensorelement (116) bereitgestellt werden;
einer Einrichtung (106) zum Kanalcodieren der Nutzdaten, um kanalcodierte Daten zu erhalten;
einer Einrichtung (108) zum Aufteilen der kanalcodierten Daten in eine Mehrzahl von Datenpaketen (112) mit einer Coderate kleiner eins; und
einer Einrichtung (110) zum Senden von Datenpaketen (112), die ausgebildet ist, um, sofern eine von der Energieversorgungseinrichtung (102) bereitstellbare elektrische Energiemenge zum Senden der jeweiligen Datenpakete (112) mit einer Standardsendeleistung ausreichend ist, die Mehrzahl von Datenpaketen (112) mit einem zeitlichen Abstand über einen Kommunikationskanal zu senden, so dass zwischen den Datenpaketen (112) Sendepausen vorhanden sind, in denen nicht gesendet wird;
wobei die Energieversorgungseinrichtung ein Energy-Harvesting-Element (114) zur leitungsungebundenen Energiegewinnung aus der Umgebung der Datensendeanordnung (100) aufweist;
wobei die Energieversorgungseinrichtung (102) einen Energiespeicher zum Speichern der von dem Energy-Harvesting-Element (114) gewonnen Energie aufweist, wobei der Energiespeicher für eine kurze, pulsartige Belastung ausgelegt ist;
wobei die Einrichtung (110) zum Senden von Datenpaketen (112) ausgebildet ist, um den zeitlichen Abstand mit dem die Datenpakete (112) gesendet werden derart zu wählen, dass der Energiespeicher der Energieversorgungseinrichtung (102) mit einer kurzen, pulsartigen Belastung belastet wird;
wobei die Einrichtung (110) zum Senden von Datenpaketen (112) ausgebildet ist, um entweder
- ein zum Senden anstehendes Datenpaket der Mehrzahl von Datenpaketen (112) mit einer reduzierten Sendeleistung zu senden, falls eine von der Energieversorgungseinrichtung (102) bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist; oder
- ein zum Senden anstehendes Datenpaket der Mehrzahl von Datenpaketen (112) nicht zu senden oder verzögert zu senden, falls eine von der Energieversorgungseinrichtung (102) bereitstellbare elektrische Energiemenge zum Senden des jeweiligen Datenpakets nicht ausreichend ist.

2. Datensendeanordnung (100) gemäß Anspruch 1, wobei das Energy-Harvesting-Element (114) ausgebildet ist, um zur Energiegewinnung Verformungsenergie, Bewegungsenergie, thermische Energie, elektromagnetische Energie oder Lichtenergie in elektrische Energie umzuwandeln.

3. Datensendeanordnung (100) gemäß einem der Ansprüche 1 bis 2, wobei die Einrichtung (108) zum Aufteilen der kanalcodierten Daten ausgebildet ist, um zumindest zwei Datenpakete der Mehrzahl von Datenpaketen (112) jeweils mit einer Pilotsequenz zur Synchronisation der Datenpakete (112) in einem Datenempfänger (200) zu versehen, wobei die Einrichtung (108) zum Aufteilen der kanalcodierten Daten in eine Mehrzahl von Datenpaketen (112) ausgebildet ist, um eine Anordnung der Pilotsequenzen in den zumindest zwei Datenpaketen zu variieren, so dass ein Datenpaket der zumindest zwei Datenpakete eine Anordnung der Pilotsequenz aufweist, die von der Anordnung der Pilotsequenz eines anderen Datenpakets der zumindest zwei Datenpakete abweicht.

4. Datensendeanordnung (100) gemäß einem der Ansprüche 1 bis 3, wobei die Mehrzahl von Datenpaketen (112) jeweils eine Länge von 20 Symbolen oder weniger aufweisen.

5. System (300), mit folgenden Merkmalen:
einer Datensendeanordnung (100) gemäß einem der Ansprüche 1 bis 4; und
einem Datenempfänger (200), mit folgenden Merkmalen:
einer Einrichtung (202) zum Empfangen von Datenpaketen (112), wobei die Datenpakete (112) jeweils eine Coderate von weniger als eins aufweisen und mit einem zeitlichen Abstand über einen Kommunikationskanal gesendet werden, so dass zwischen den Datenpaketen (112) Sendepausen vorhanden sind, in denen nicht gesendet wird;
wobei die Einrichtung (202) zum Empfangen von Datenpaketen (112) ausgebildet ist, um die Datenpakete (112) in einem Empfangsdatenstrom zu ermitteln;
wobei die Einrichtung (202) zum Empfangen von Datenpaketen (112) ausgebildet ist, um eine Empfangsleistung des Empfangsdatenstroms während dem Empfang der jeweiligen Datenpakete und in den Sendepausen vor dem Empfang der jeweiligen Datenpakete und/oder nach dem Empfang der jeweiligen Datenpakete zu messen, um eine Empfangsleistungsveränderung des Empfangsdatenstroms zu ermitteln;
wobei die Einrichtung (202) zum Empfangen von Datenpaketen (112) ausgebildet ist, um jedes der Datenpakete basierend auf der ermittelten Empfangsleistungsveränderung für eine Weiterverarbeitung zu gewichten, um empfangene Datenpakete zu erhalten;
einer Einrichtung (204) zum Weiterverarbeiten der empfangenen Datenpakete, die ausgebildet ist, um eine von der Gewichtung der empfangenen Datenpakete abhängige Kanaldecodierung der empfangen Datenpakete durchzuführen, um in den Datenpakten enthaltene Nutzdaten zu erhalten.

6. System (300) gemäß Anspruch 5, wobei die Einrichtung (204) zum Weiterverarbeiten der empfangenen Datenpakete ausgebildet ist, um Datenpakete mit einer höheren Gewichtung bei der Kanaldecodierung stärker zu berücksichtigen als Datenpakete mit einer geringeren Gewichtung.

7. System (300) gemäß Anspruch 5 oder 6, wobei die Einrichtung (202) zum Empfangen von Datenpaketen (112) ausgebildet ist, um diejenigen Datenpakete der Datenpakete (112) als empfangene Datenpakete weiterzuverarbeiten, dessen ermittelte Empfangsleistungsveränderung einen Schwellwert überschreiten, der so gewählt ist, dass die entsprechenden Datenpakete für eine Decodierung geeignet sind; und
wobei die Einrichtung (202) zum Empfangen von Datenpaketen (112) ausgebildet ist, um diejenigen Datenpakete der Datenpakete (112) zu verwerfen, dessen ermittelte Empfangsleistungsveränderung kleiner gleich des Schwellwerts ist.

8. System (300) gemäß Anspruch 5, wobei die Einrichtung (202) zum Empfangen von Datenpaketen (112) ausgebildet ist, um anhand der ermittelten Empfangsleistungsveränderung zu ermitteln, ob ein Datenpaket gesendet wurde; und/oder
wobei die Einrichtung (202) zum Empfangen von Datenpaketen (112) ausgebildet ist, um anhand der ermittelten Empfangsleistungsveränderung zu ermitteln, ob ein gesendetes Datenpaket von einem Störer überlagert wurde.

9. System (300) gemäß einem der Ansprüche 5 bis 8, wobei jedes der Datenpakete mit einer Pilotsequenz zur Synchronisation des jeweiligen Datenpakets in dem Datenempfänger (200) versehen ist, wobei die Einrichtung (202) zum Empfangen von Datenpaketen (112) ausgebildet ist, um die Datenpakete in dem Empfangsdatenstrom basierend auf den Pilotsequenzen zu lokalisieren, um die Datenpakete in dem Empfangsdatenstrom zu ermitteln.

10. System (300) gemäß Anspruch 9, wobei die Einrichtung (204) zum Weiterverarbeiten der empfangenen Datenpakete ausgebildet ist, um basierend auf den Pilotsequenzen der empfangenen Datenpakete die Gewichtung der empfangenen Datenpakete für die Kanaldecodierung anzupassen.

11. Verfahren (400) zum Betrieb einer Datensendeanordnung (100), wobei die Datensendeanordnung (100) eine Energieversorgungseinrichtung (102) zur Versorgung der Datensendeanordnung (100) mit elektrischer Energie aufweist, wobei die Energieversorgungseinrichtung ein Energy-Harvesting-Element (114) zur leitungsungebunden Energiegewinnung aus der Umgebung der Datensende-anordnung (100) aufweist, wobei die Energieversorgungseinrichtung (102) einen Energiespeicher zum Speichern der von dem Energy-Harvesting-Element (114) gewonnen Energie aufweist, wobei der Energiespeicher für eine kurze, pulsartige Belastung ausgelegt ist, wobei das Verfahren (400) aufweist:
Ermitteln (402) von Nutzdaten, die von einem mit der Datensendeanordnung (100) verbundenen Sensorelement (116) bereitgestellt werden;
Kanalcodieren (404) der Nutzdaten, um kanalcodierte Daten zu erhalten;
Aufteilen (406) der kanalcodierten Daten in eine Mehrzahl von Datenpaketen (112) mit einer Coderate kleiner eins;
Senden (408) der Mehrzahl von Datenpaketen mit einem zeitlichen Abstand über einen Kommunikationskanal, so dass zwischen den Datenpaketen (112) Sendepausen vorhanden sind, in denen nicht gesendet wird, sofern eine von der Energieversorgungseinrichtung (102) bereitstellbare elektrische Energiemenge zum Senden der jeweiligen Datenpakete (112) mit einer Standardsendeleistung ausreichend ist;
wobei bei dem Senden der Mehrzahl von Datenpaketen der zeitliche Abstand mit dem die Datenpakete (112) gesendet werden derart gewählt wird, dass der Energiespeicher der Energieversorgungseinrichtung (102) mit einer kurzen, pulsartigen Belastung belastet wird;
wobei das Senden (408) der Mehrzahl von Datenpaketen (112) aufweist:
- Senden eines anstehenden Datenpakets der Mehrzahl von Datenpaketen (112) mit einer reduzierten Sendeleistung, falls eine von der Energieversorgungseinrichtung (102) bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist; oder
- Senden eines anstehenden Datenpakets der Mehrzahl von Datenpaketen (112) nicht oder verzögert, falls eine von der Energieversorgungseinrichtung (102) bereitstellbare elektrische Energiemenge zum Senden des jeweiligen Datenpakets nicht ausreichend ist.

12. Computerprogramm zur Durchführung eines Verfahrens gemäß Anspruch 11, falls das Computerprogramm auf einem Computer ausgeführt wird.

## Claims

1. Data transmission arrangement (100) comprising:
energy supply means (102) for supplying the data transmission arrangement (100) with electrical energy;
means (104) for determining payload data provided by a sensor element (116) connected to the data transmission arrangement (100);
means (106) for channel coding of the payload data so as to obtain channel-coded data;
means (108) for splitting up the channel-coded data into a plurality of data packets (112) having a code rate smaller than one; and
means (110) for transmitting data packets (112) which is configured to transmit the plurality of data packets (112) via a communication channel with a time lag, so that there are non-transmission periods in between the data packets (112) during which no transmission is performed, only in the case that an amount of electrical energy that can be provided by the energy supply means (102) is sufficient for transmitting the respective data packets (112) with a predefined standard transmitting power;
the energy supply means comprising an energy harvesting element (114) for non-line-conducted energy extraction from the environment of the data transmission arrangement (100);
the energy supply means (102) comprising an energy store for storing the energy extracted by the energy harvesting element (114), the energy store being configured for short, pulse-like load;
the means (110) for transmitting data packets (112) being configured to select the time lag with which the data packets (112) are transmitted such that the energy store of the energy supply means (102) is subjected to a short, pulse-like load;
the means (110) for transmitting data packets (112) being configured to either
- transmit a data packet, which is about to be transmitted, of the plurality of data packets (112) at a reduced transmitting power if an amount of electrical energy that can be provided by the energy supply means (102) is sufficient for transmitting the respective data packet at the reduced transmitting power, the reduced transmitting power being reduced by a maximum of 40 dB as compared to the standard transmitting power; or
- not transmit or to transmit with delay a data packet, which is about to be transmitted, of the plurality of data packets (112) if an amount of electrical energy that can be provided by the energy supply means (102) is not sufficient for transmitting the respective data packet.

2. Data transmission arrangement (100) as claimed in claim 1, wherein the energy harvesting element (114) is configured to convert deformation energy, kinetic energy, thermal energy, electromagnetic energy or light energy to electrical energy in order to produce energy.

3. Data transmission arrangement (100) as claimed in one of claims 1 to 2, the means (108) for splitting up the channel-coded data being configured to provide at least two data packets of the plurality of data packets (112) with a pilot sequence in each case for synchronizing the data packets (112) in a data receiver (200), the means (108) for splitting up the channel-coded data into a plurality of data packets (112) being configured to vary an arrangement of the pilot sequences in the at least two data packets such that one data packet of the at least two data packets comprises an arrangement of the pilot sequence which deviates from the arrangement of the pilot sequence of another data packet of the at least two data packets.

4. Data transmission arrangement (100) as claimed in one of claims 1 to 3, wherein the plurality of data packets (112) each comprise a length of 20 symbols or less.

5. System (300) comprising:
a data transmission arrangement (100) as claimed in any of claims 1 to 4; and
a data receiver (200) comprising:
means (202) for receiving data packets (112), the data packets (112) each having a code rate smaller than one and being transmitted via a communication channel with a time lag, so that there are non-transmission periods in between the data packets (112) during which no transmission is performed,
the means (202) for receiving data packets (112) being configured to determine the data packets (112) within a receive data stream;
the means (202) for receiving data packets (112) being configured to measure a receive power of the receive data stream during reception of the respective data packets and during the non-transmission periods before the reception of the respective data packets and/or after the reception of the respective data packets, so as to determine a change in the receive power of the receive data stream;
the means (202) for receiving data packets (112) being configured to weight, for further processing, each of the data packets on the basis of the determined change in the receive power so as to obtain received data packets;
means (204) for further processing the received data packets, configured to perform channel decoding of the received data packets which is dependent on the weighting of the received data packets, so as to obtain payload data contained within the data packets.

6. System (300) as claimed in claim 5, wherein the means (204) for further processing of the received data packets is configured to take greater account, in the channel decoding, of data packets having a higher weighting than of data packets having a lower weighting.

7. System (300) as claimed in claim 5 or 6, wherein the means (202) for receiving data packets (112) is configured to further process those data packets of the data packets (112) as received data packets whose determined change in the receive power exceeds a threshold value selected such that the corresponding data packets are suitable for decoding; and
wherein the means (202) for receiving data packets (112) is configured to discard those data packets of the data packets (112) whose determined change in the receive power is smaller than or equal to the threshold value.

8. System (300) as claimed in claim 5, wherein the means (202) for receiving data packets (112) is configured to determine, by means of the determined change in the receive power, whether or not a data packet has been transmitted; and/or
wherein the means (202) for receiving data packets (112) is configured to determine, by means of the determined change in the receive power, whether or not a transmitted data packet has been superimposed by an interferer.

9. System (300) as claimed in one of claims 5 to 8, wherein each of the data packets is provided with a pilot sequence for synchronizing the respective data packet within the data receiver (200), wherein the means (202) for receiving data packets (112) is configured to locate the data packets within the receive data stream on the basis of the pilot sequences so as to determine the data packets within the receive data stream.

10. System (300) as claimed in claim 9, wherein the means (204) for further processing the received data packets is configured to adapt the weighting of the received data packets for channel decoding on the basis of the pilot sequences of the received data packets.

11. Method (400) of operating a data transmission arrangement (100), the data transmission arrangement (100) comprising energy supply means (102) for supplying the data transmission arrangement (100) with electrical energy, the energy supply means comprising an energy harvesting element (114) for non-line-conducted energy extraction from the environment of the data transmission arrangement (100), the energy supply means (102) comprising an energy store for storing the energy extracted by the energy harvesting element (114), the energy store being configured for short, pulse-like load, the method (400) comprising:
determining (402) payload data provided by a sensor element (116) connected to the data transmission arrangement (100);
channel coding (404) of the payload data so as to obtain channel-coded data;
splitting up (406) the channel-coded data into a plurality of data packets (112) having a code rate smaller than one;
transmitting (408) the plurality of data packets via a communication channel with a time lag, so that there are non-transmission periods in between the data packets (112) during which no transmission is performed, only in the case that an amount of electrical energy that can be provided by the energy supply means (102) is sufficient for transmitting the respective data packets (112) at a predefined standard transmitting power;
said transmitting of the plurality of data packets comprising selecting the time lag with which the data packets (112) are transmitted such that the energy store of the energy supply means (102) is subjected to a short, pulse-like load;
said transmitting (408) of the plurality of data packets (112) comprising:
- transmitting a data packet, which is about to be transmitted, of the plurality of data packets (112) at a reduced transmitting power if an amount of electrical energy that can be provided by the energy supply means (102) is sufficient for transmitting the respective data packet at the reduced transmitting power, the reduced transmitting power being reduced by a maximum of 40 dB as compared to the standard transmitting power; or
- not transmitting or transmitting with delay a data packet, which is about to be transmitted, of the plurality of data packets (112) if an amount of electrical energy that can be provided by the energy supply means (102) is not sufficient for transmitting the respective data packet.

12. Computer program for performing a method as claimed in claim 11 if the computer program is executed on a computer.

## Revendications

1. Aménagement de transmission de données (100), aux caractéristiques suivantes:
un moyen d'alimentation en énergie (102) destiné à alimenter l'aménagement de transmission de données (100) en énergie électrique;
un moyen (104) destiné à déterminer les données utiles qui sont mises à disposition par un élément capteur (116) connecté à l'aménagement de transmission de données (100);
un moyen (106) destiné à coder par canal les données utiles, pour obtenir des données codées par canal;
un moyen (108) destiné à diviser les données codées par canal en une pluralité de paquets de données (112) à un débit de codage inférieur à un; et
un moyen (110) destiné à transmettre de paquets de données (112) conçu pour transmettre, pour autant qu'une quantité d'énergie électrique pouvant être fournie par le moyen d'alimentation en énergie (102) soit suffisante pour transmettre les paquets de données respectifs (112) avec une puissance de transmission standard, la pluralité de paquets de données (112) à un intervalle de temps via un canal de communication, de sorte qu'entre les paquets de données (112) soient présentes des pauses de transmission pendant lesquels il n'est pas effectué de transmission;
dans lequel le moyen d'alimentation en énergie présente un élément de captage d'énergie (114) destiné à la production d'énergie non liée à un acheminement par câble à partir de l'environnement de l'aménagement de transmission de données (100) ;
dans lequel le moyen d'alimentation en énergie (102) présente un accumulateur d'énergie destiné à accumuler l'énergie captée par l'élément de captage d'énergie (114), dans lequel l'accumulateur d'énergie est conçu pour une courte sollicitation par impulsions;
dans lequel le moyen (110) de transmission de paquets de données (112) est conçu pour sélectionner l'intervalle de temps pendant lequel sont envoyés les paquets de données (112) de sorte que l'accumulateur d'énergie du moyen d'alimentation en énergie (102) soit sollicité par une courte sollicitation par impulsions;
dans lequel le moyen (110) de transmission de paquets de données (112) est conçu pour soit
- transmettre un paquet de données en attente de transmission de la pluralité de paquets de données (112) avec une puissance de transmission réduite si une quantité d'énergie électrique pouvant être fournie par le moyen d'alimentation en énergie (102) pour la transmission du paquet de données respectif avec la puissance de transmission réduite est suffisante, où la puissance de transmission réduite est réduite en comparaison avec la puissance de transmission standard de tout au plus 40 dB; ou
- ne pas transmettre un paquet de données en attente de transmission de la pluralité de paquets de données (112) ou le transmettre de manière retardée si une quantité d'énergie électrique pouvant être fournie par le moyen d'alimentation en énergie (102) pour la transmission du paquet de données respectif n'est pas suffisante.

2. Aménagement de transmission de données (100) selon la revendication 1, dans lequel l'élément de captage d'énergie (114) est conçu pour convertir, pour le captage d'énergie, de l'énergie de déformation, de l'énergie cinétique, de l'énergie thermique, de l'énergie électromagnétique ou de l'énergie lumineuse en énergie électrique.

3. Aménagement de transmission de données (100) selon l'une des revendications 1 à 2, dans lequel le moyen (108) pour diviser les données codées par canal est conçu pour pourvoir chacun d'au moins deux paquets de données de la pluralité de paquets de données (112) d'une séquence pilote pour la synchronisation des paquets de données (112) dans un récepteur de données (200), dans lequel le moyen (108) pour diviser les données codées par canal en une pluralité de paquets de données (112) est conçu pour modifier une disposition des séquences pilotes dans les au moins deux paquets de données, de sorte qu'un paquet de données des au moins deux paquets de données présente une disposition de la séquence pilote qui s'écarte de la disposition de la séquence pilote d'un autre paquet de données des au moins deux paquets de données.

4. Aménagement de transmission de données (100) selon l'une des revendications 1 à 3, dans lequel la pluralité de paquets de données (112) présentent, chacun, une longueur de 20 symboles ou moins.

5. Système (300), aux caractéristiques suivantes:
un aménagement de transmission de données (100) selon l'une des revendications 1 à 4; et
un récepteur de données (200), aux caractéristiques suivantes:
un moyen (202) destiné à recevoir des paquets de données (112), où les paquets de données (112) présentent, chacun, un débit de codage inférieur à un et sont transmis à un intervalle de temps via un canal de communication, de sorte qu'entre les paquets de données (112) soient présents des intervalles de transmission pendant lesquels il n'est pas effectué de transmission;
dans lequel le moyen (202) destiné à recevoir des paquets de données (112) est conçu pour déterminer les paquets de données (112) dans un flux de données de réception;
dans lequel le moyen (202) destiné à recevoir des paquets de données (112) est conçu pour mesurer une puissance de réception du flux de données de réception au cours de la réception des paquets de données respectifs et au cours des pauses de transmission avant la réception des paquets de données respectifs et/ou après la réception des paquets de données respectifs, pour déterminer un changement de puissance de réception du flux de données de réception;
dans lequel le moyen (202) destiné à recevoir des paquets de données (112) est conçu pour pondérer chacun des paquets de données sur base du changement de puissance de réception déterminée pour un traitement ultérieur, afin d'obtenir des paquets de données reçus;
un moyen (204) destiné à traiter ultérieurement les paquets de données reçus, qui est conçu pour effectuer un décodage par canal des paquets de données reçus en fonction de la pondération des paquets de données reçus, afin d'obtenir les données utiles contenues dans les paquets de données.

6. Système (300) selon la revendication 5, dans lequel le moyen (204) est conçu pour traiter ultérieurement les paquets de données reçus pour prendre en compte plus fortement les paquets de données à pondération plus élevée lors du décodage que les paquets de données à pondération plus faible.

7. Système (300) selon la revendication 5 ou 6, dans lequel le moyen (202) destiné à recevoir les paquets de données (112) est conçu pour traiter ultérieurement, comme paquets de données reçus, les paquets de données (112) dont le changement de puissance de réception déterminée excède une valeur de seuil qui est choisie de sorte que les paquets de données correspondants conviennent pour un décodage; et
dans lequel le moyen (202) destiné à recevoir des paquets de données (112) est conçu pour rejeter, parmi les paquets de données, les paquets de données (112) dont le changement de puissance de réception déterminé est inférieur ou égal à la valeur de seuil.

8. Système (300) selon la revendication 5, dans lequel le moyen (202) destiné à recevoir des paquets de données (112) est conçu pour déterminer, à l'aide du changement de puissance de réception déterminé, si un paquet de données a été transmis; et/ou
dans lequel le moyen (202) destiné à recevoir des paquets de données (112) est conçu pour déterminer, à l'aide du changement de puissance de réception déterminé, si un paquet de données transmis a été superposé par un perturbateur.

9. Système (300) selon l'une des revendications 5 à 8, dans lequel chacun des paquets de données est pourvu d'une séquence pilote pour la synchronisation du paquet de données respectif dans le récepteur de données (200), dans lequel le moyen (202) destiné à recevoir des paquets de données (112) est réalisé pour localiser les paquets de données dans le flux de données de réception sur base des séquences pilotes pour déterminer les paquets de données dans le flux de données de réception.

10. Système (300) selon la revendication 9, dans lequel le moyen (204) pour traiter ultérieurement les paquets de données reçus est conçu pour adapter, sur base des séquences de pilotes des paquets de données reçus, la pondération des paquets de données reçus pour le décodage par canal.

11. Procédé (400) pour faire fonctionner un aménagement de transmission de données (100), dans lequel l'aménagement de transmission de données (100) présente un moyen d'alimentation en énergie (102) pour l'alimentation de l'aménagement de transmission de données (100) en énergie électrique, dans lequel le moyen d'alimentation en énergie est un élément de captage d'énergie (114) destiné à la production d'énergie non liée à un acheminement par câble à partir de l'environnement de l'aménagement de transmission de données (100), dans lequel le moyen d'alimentation en énergie (102) présente un moyen d'accumulation d'énergie destiné à accumuler l'énergie captée de l'élément de captage d'énergie (114), dans lequel l'accumulateur d'énergie est conçu pour une courte sollicitation par impulsions, dans lequel le procédé (400) présente le fait de:
déterminer (402) les données utiles qui sont mises à disposition par un élément de capteur (116) connecté à l'aménagement de transmission de données (100);
coder par canal (404) les données utiles, pour obtenir des données codées par canal;
diviser (406) les données codées par canal en une pluralité de paquets de données (112) à un débit de codage inférieur à un;
transmettre (408) la pluralité de paquets de données à un intervalle de temps via un canal de communication, de sorte qu'entre les paquets de données (112) soient présentes des pauses de transmission pendant lesquelles il n'est pas effectué de transmission pour autant qu'une quantité d'énergie électrique mise à disposition par le moyen d'alimentation en énergie (102) soit suffisante pour transmettre les paquets de données respectifs (112) à une puissance de transmission standard;
dans lequel, lors de la transmission de la pluralité de paquets de données, l'intervalle de temps avec lequel sont transmis les paquets de données (112) est sélectionné de sorte que l'accumulateur d'énergie du moyen d'alimentation en énergie (102) soit sollicité par une courte sollicitation par impulsions;
dans lequel la transmission (408) de la pluralité de paquets de données (112) présente le fait de:
- transmettre un paquet de données en attente de la pluralité de paquets de données (112) avec une puissance de transmission réduite si une quantité d'énergie électrique mise à disposition par le moyen d'alimentation en énergie (102) est suffisante pour transmettre le paquet de données respectif avec la puissance de transmission réduite, où la puissance de transmission réduite est réduite, en comparaison avec la puissance de transmission standard, de tout au plus 40 dB; ou
- transmettre un paquet de données en attente de la pluralité de paquets de données (112) de manière retardée ou non si une quantité d'énergie électrique mise à disposition par le moyen d'alimentation en énergie (102) n'est pas suffisante pour transmettre le paquet de données respectif.

12. Programme d'ordinateur pour la mise en oeuvre d'un procédé selon la revendication 11 lorsque le programme d'ordinateur est exécuté sur un ordinateur.
